(19) Europäisches Patentamt
European Patent Office
Office européen des brevets

(11) **EP 4 518 173 A1**

(12) **EUROPEAN PATENT APPLICATION**
published in accordance with Art. 153(4) EPC

(43) Date of publication:
**05.03.2025 Bulletin 2025/10**

(21) Application number: **22939023.2**

(22) Date of filing: **27.04.2022**

(51) International Patent Classification (IPC):
*H04B 7/0456* ^(2017.01)

(52) Cooperative Patent Classification (CPC):
**H04B 7/0456**

(86) International application number:
**PCT/CN2022/089666**

(87) International publication number:
**WO 2023/206170 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Mingju**
**Beijing 100085 (CN)**

(74) Representative: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(54) **CSI REPORTING METHOD AND APPARATUS, PRECODING MATRIX DETERMINATION METHOD AND APPARATUS, AND DEVICE**

(57) The present application relates to the field of mobile communications. Disclosed are a CSI reporting method and apparatus, a precoding matrix determination method and apparatus, and a device. The CSI reporting method comprises: sending an uplink reference signal to a network device; receiving beamformed downlink pilot signals that are sent by the network device at T consecutive moments; according to the downlink pilot signals, estimating downlink effective channel information corresponding to the T consecutive moments; according to the downlink effective channel information, determining CSI corresponding to the T consecutive moments; and reporting the CSI to the network device, wherein the CSI is used by the network device to calculate a precoding matrix for downlink data transmission at a moment t. In the present application, a network device can calculate precoding matrixes at different moments in the future according to CSI reported once by a terminal device. A terminal device frequently reporting CSI due to rapid movement is avoided, while the data transmission performance is ensured, thereby reducing the period of the terminal device reporting CSI and decreasing the uplink feedback overhead of the terminal device.

FIG. 2

transmitting an uplink reference signal to a network device — 202

receiving beamformed downlink pilot signals transmitted by the network device at T consecutive time points — 204

estimating downlink effective channel information corresponding to the T consecutive time points according to the beamformed downlink pilot signals of the T consecutive time points — 206

determining CSI corresponding to the T consecutive time points according to the downlink effective channel information corresponding to the T consecutive time points — 208

reporting the CSI to the network device — 210

**Description**

## TECHNICAL FIELD

The disclosure relates to the field of mobile communication, and more particularly, to a method for reporting channel status information (CSI), an apparatus for reporting CSI, a method for determining a precoding matrix, an apparatus for determining a precoding matrix, and a device.

## BACKGROUND

In a new radio (NR) system, a terminal reports channel status information (CSI) to a network device, so that the network device can calculate a precoding matrix used for downlink data transmission based on the information reported by the terminal.

In Release 16 (R16), the R16 type II (Type II) codebook and the R16 Type II port selection codebook are provided. In R17, the R17 Type II port selection codebook is provided. Through the above codebooks, the terminal can perform high-precision CSI quantized feedback.

For a terminal moving at a low speed, the network device can accurately calculate a precoding matrix of a corresponding channel based on the above codebook reported by the terminal, thereby improving the performance of data transmission. For a terminal moving at a medium-and-high speed, if the same CSI reporting cycle as that of the terminal moving at a low speed is used, since the movement of the terminal may cause rapid changes in the channel at different time points, the precoding matrix calculated based on the above codebook may have a mismatch with the channel, thereby reducing the performance of data transmission. For the rapidly changing channel, how to design a corresponding codebook and calculate a precoding matrix that matches the channel is an urgent problem to be solved.

## SUMMARY

Embodiments of the present disclosure provide a method for reporting channel status information (CSI), an apparatus for reporting CSI, a method for determining precoding matrix, an apparatus for determining precoding matrix, and a device. The technical solutions are as follows.

According to one aspect of the present disclosure, a method for reporting CSI is provided. The method is performed by a terminal. The method includes:

transmitting an uplink reference signal to a network device;
receiving beamformed downlink pilot signals transmitted by the network device at T consecutive time points;
estimating downlink effective channel information corresponding to the T consecutive time points according to the beamformed downlink pilot signals of the T consecutive time points;
determining CSI corresponding to the T consecutive time points according to the downlink effective channel information corresponding to the T consecutive time points; and
reporting the CSI to the network device;
in which, a beam used by the beamformed downlink pilot signals is determined based on uplink channel information estimated according to the uplink reference signal, and the CSI is used by the network device to determine a precoding matrix for downlink data transmission at a time point t, in which the time point t is after the T consecutive time points, and T is a positive integer.

According to another aspect of the present disclosure, a method for determining a precoding matrix is provided. The method is performed by a network device, and the method includes:

receiving an uplink reference signal transmitted by a terminal;
estimating uplink channel information according to the uplink reference signal, and determining a beam for transmitting downlink pilot signals according to the uplink channel information;
transmitting the downlink pilot signals beamformed with the beam to the terminal at T consecutive time points;
receiving CSI corresponding to the T consecutive time points reported by the terminal; and
determining a precoding matrix for downlink data transmission at a time point t according to the CSI;
in which the CSI is determined by the terminal according to the beamformed downlink pilot signals, the time point t is after the T consecutive time points, and T is a positive integer.

According to another aspect of the present disclosure, an apparatus for reporting CSI is provided. The apparatus includes:

a transmitting module, configured to transmit an uplink reference signal to a network device;

a receiving module, configured to receive beamformed downlink pilot signals transmitted by the network device at T consecutive time points; and

a determining module, configured to estimate downlink effective channel information corresponding to the T consecutive time points according to the beamformed downlink pilot signals of the T consecutive time points;

in which the determining module is further configured to determine CSI corresponding to the T consecutive time points according to the downlink effective channel information corresponding to the T consecutive time points; and

the transmitting module is further configured to report the CSI to the network device;

in which, a beam used by the beamformed downlink pilot signals is determined based on uplink channel information estimated according to the uplink reference signal, and the CSI is used by the network device to determine a precoding matrix for downlink data transmission at a time point t, in which the time point t is after the T consecutive time points, and T is a positive integer.

According to another aspect of the present disclosure, an apparatus for determining a precoding matrix is provided, and the device includes:

a receiving module, configured to receive an uplink reference signal transmitted by the terminal;

a determining module, configured to estimate uplink channel information according to the uplink reference signal, and determine a beam for transmitting downlink pilot signals according to the uplink channel information; and

a transmitting module, configured to transmit the downlink pilot signals beamformed with the beam to the terminal at T consecutive time points;

in which the receiving module is further configured to receive CSI corresponding to the T consecutive time points reported by the terminal; and

the determining module is further configured to determine a precoding matrix for downlink data transmission at a time point t according to the CSI;

in which the CSI is determined by the terminal according to the beamformed downlink pilot signals, and the time point t is after the T consecutive time points, and T is a positive integer.

According to another aspect of the present disclosure, a terminal is provided. The terminal includes: a processor; a transceiver coupled to the processor; and a memory for storing executable instructions for the processor. The processor is configured to load and execute the executable instructions to perform the method for reporting CSI as described in the above aspect.

According to another aspect of the present disclosure, a network device is provided. The network device includes: a processor; a transceiver coupled to the processor; a memory for storing executable instructions for the processor. The processor is configured to load and execute the executable instructions to perform the method for determining a precoding matrix as described in the above aspect.

According to another aspect of the present disclosure, a computer-readable storage medium is provided, in which executable instructions are stored, and the executable instructions are loaded and executed by a processor to perform the method for reporting CSI or the method for determining a precoding matrix as described in the above aspects.

According to another aspect of the present disclosure, a chip is provided. The chip includes a programmable logic circuit and/or program instructions. When the chip is run on a computer device, the method for reporting CSI or the method for determining a precoding matrix as described in the above aspects is performed.

According to another aspect of the present disclosure, a computer program product or a computer program is provided. The computer program product or computer program includes computer instructions. The computer instructions are stored in a computer-readable storage medium. A processor reads the computer instructions from the computer-readable storage medium and executes the computer instructions, so that the computer device performs the method for reporting CSI or the method for determining a precoding matrix as described in the above aspects.

The technical solution provided by the disclosure at least includes the following beneficial effects:

The terminal determines the CSI according to the beamformed downlink pilot signals at the T consecutive time points, and the correlation of the channel information in the time domain can be taken into consideration in the process of determining the CSI. The network device uses the CSI to determine the precoding matrix, which enables the network device to calculate the precoding matrices at different time points in the future based on the CSI reported once by the terminal. While ensuring data transmission performance, it prevents the terminal from frequently reporting the CSI due to rapid movement, reduces a period for the terminal to report the CSI, and reduces the uplink feedback overhead of terminal. Moreover, using the beamformed downlink pilot signals to determine the CSI can improve the accuracy of determining the CSI.

## BRIEF DESCRIPTION OF THE DRAWINGS

In order to more clearly illustrate the technical solutions in embodiments of the present disclosure, the drawings needed to be used in the description of the embodiments will be briefly introduced below. Obviously, the drawings in the following description are only some embodiments of the present disclosure. For those of skilled in the art, other drawings can also be obtained based on these drawings without creative efforts.

FIG. 1 is a schematic diagram of a system architecture of a communication system provided by an embodiment of the present disclosure;

FIG. 2 is a flow chart of a method for reporting channel status information (CSI) provided by an embodiment of the present disclosure;

FIG. 3 is a flow chart of a method for determining a precoding matrix provided by an embodiment of the present disclosure;

FIG. 4 is a flow chart of a method for determining a precoding matrix provided by an embodiment of the present disclosure;

FIG. 5 is a schematic diagram of a method for transmitting a channel status information-reference signal (CSI-RS) provided by an embodiment of the present disclosure;

FIG. 6 is a flow chart of a method for determining a precoding matrix provided by an embodiment of the present disclosure;

FIG. 7 is a schematic diagram of a method for transmitting a CSI-RS provided by an embodiment of the present disclosure;

FIG. 8 is a flow chart of a method for determining a precoding matrix provided by an embodiment of the present disclosure;

FIG. 9 is a block diagram of an apparatus for reporting CSI provided by an embodiment of the present disclosure;

FIG. 10 is a block diagram of an apparatus for determining a precoding matrix provided by an embodiment of the present disclosure;

FIG. 11 is a schematic diagram of a communication device provided by an embodiment of the present disclosure.

## DETAILED DESCRIPTION

In order to make the purpose, technical solutions and advantages of the present disclosure clear, embodiments of the present disclosure will be further described in detail below with reference to the accompanying drawings.

Exemplary embodiments will be described in detail herein, examples of which are illustrated in the accompanying drawings. When the following description refers to the drawings, the same numbers in different drawings refer to the same or similar elements unless otherwise indicated. The implementations described in the following embodiments do not represent all implementations consistent with the disclosure. Rather, they are merely examples of apparatus and methods consistent with aspects of the disclosure as detailed in the appended claims.

The terminology used in the disclosure is for the purpose of describing particular embodiments only and is not intended to be limiting of the disclosure. As used in this disclosure and the appended claims, the singular forms "a," "said" and "the" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in this disclosure to describe various information, the information should not be limited to these terms. These terms are only used to distinguish information of the same type from each other. For example, without departing from the scope of the present disclosure, the first information may also be called second information, and similarly, the second information may also be called first information. Depending on the context, the word "if" as used herein may be interpreted as "when" or "while" or "in response to determining."

In a new radio (NR) system, a terminal reports channel status information (CSI) to a network device, so that the network device can calculate a precoding matrix used for downlink data transmission based on the information reported by the terminal. In Release 16 (R16), the R16 Type II codebook and the R16 Type II port selection codebook are provided. In R17, the R17 Type II port selection codebook is provided. Through the above codebooks, the terminal can implement high-precision CSI quantized feedback. The network device calculates the precoding matrix used for downlink data transmission based on the above codebook reported by the terminal, which can make the data transmission process to adapt a change in a channel status and improve the performance of data transmission.

**An introduction to the R16 Type II codebook and the R16 Type II port selection codebook**

For the R16 Type II codebook and the R16 Type II port selection codebook, a codebook structure can be expressed as $W = W_1 \widetilde{W}_2 W_f^H$. $W_f \in \mathbb{C}^{N_3 \times M_v}$ represents a frequency domain compression matrix composed of frequency domain basis vectors (FD basis vectors), $N_3$ represents a number of subbands of a Precoding Matrix Indication (PMI), $M_v$ represents a number of FD basis vectors when a transmission rank is v, and $\mathbb{C}$ represents a complex number.

For the R16 Type II codebook, $W_1 \in \mathbb{N}^{P \times 2L}$ represents a spatial domain compression diagonal matrix composed of Spatial Domain basis vectors (SD basis vectors), $N_t$ represents a number of ports of transmitting antennas, and L represents a number of SD basis vectors contained in one polarization direction. Usually the antenna has two polarization directions, and the two polarization directions use the same SD basis vector.

For the R16 Type II port selection codebook, $W_1 \in \mathbb{N}^{P \times 2L}$ represents a port selection diagonal matrix, P represents a number of Channel Status Information-Reference Signal (CSI-RS) ports, and one polarization direction consists of L unit basis vectors. Usually the antenna has two polarization directions, and the two polarization directions use the same L unit basis vectors. N represents a positive integer. The terminal selects L consecutive ports from the P ports to perform reporting. $\widetilde{W}_2 \in \mathbb{C}^{2L \times M_v}$ represents a matrix of combination coefficients. For each transmission layer, a number of non-zero coefficients in the combination coefficients is not greater than $K_0 = \lceil 2LM_v\beta \rceil$. The parameters L, $M_v$, $\beta$, P and $N_3$ in the codebook are determined and configured for the terminal by the network device. This transmission layer is used by the network device to map codewords to ports.

When the transmission rank v>1, all transmission layers use the same L SD basis vectors, each layer independently uses a $\widetilde{W}_2$ and $W_f$, and different layers can use different $M_v$ FD basis vectors. For example, $W_1$, $\widetilde{W}_2$ and $W_f$ are determined and calculated by the terminal estimating effective channel information based on the received beamformed CSI-RS transmitted by the network device. The CSI-RS beam is calculated by the network device based on estimated angle information of an uplink channel.

**An introduction to the R17 Type II port selection codebook**

For the R17 Type II port selection codebook, its codebook structure can also be expressed as $W = W_1 \widetilde{W}_2 W_f^H$, where $W_1 \in \mathbb{N}^{P \times 2L}$ represents a port selection diagonal matrix, P represents a number of CSI-RS ports, one polarization direction consists of L unit basis vectors, and two polarization directions use the same L unit basis vectors. Different from the R16 Type II port selection codebook, the R17 Type II port selection codebook is reported by the terminal by freely selecting L=$K_1$/2, $K_1$=$\alpha$P ports from the P ports. $\widetilde{W}_2 \in \mathbb{C}^{2L \times M_v}$ represents a matrix of combination coefficients. For each transmission layer, a number of non-zero coefficients in the combination coefficients is not greater than $K_0 = \lceil \beta K_1 M \rceil$. The parameters $\alpha$, M, $\beta$, P and $N_3$ in the codebook are determined and configured for the terminal by the network device. $W_f \in \mathbb{C}^{N_3 \times M}$ can be turned off or turned on. When $W_f$ is turned off, $W_f$ is represented by a basis vector with a length $N_3$ and all elements being 1. When $W_f$ is turned on, $W_f$ consists of two frequency domain basis vectors with a length $N_3$, which includes a basis vector with a length $N_3$ and all elements being 1. The two frequency domain basis vectors are selected from a continuous discrete Fourier Transform (DFT) window of size N, where N=2 or 4.

For example, $W_1$, $\widetilde{W}_2$ and $W_f$ are determined and calculated by the terminal estimating the effective channel information based on the received beamformed CSI-RS transmitted by the network device. The CSI-RS beam is calculated by the network device based on the estimated angle information and delay information of an uplink channel.

When a user (terminal) moves at a medium-high speed, in order to obtain an accurate precoding matrix, the user needs to use a small reporting period to report the CSI. If the above Type II codebook is still used for reporting CSI, the uplink feedback overhead of the terminal may be greatly increased. If the period for reporting CSI used by the user remains unchanged or is large, system performance may be reduced.

For a terminal moving at a medium-high speeds, a Doppler (Doppler) offset may cause the channel to change rapidly with time. If the above Type II codebook is still used, the terminal needs to frequently feedback CSI to adapt to the change of the channel, to ensure data transmission performance, otherwise data transmission performance may be reduced. However, frequently reporting CSI may increase the uplink feedback overhead of the terminal. Within a certain period of time, the channel information at different time points are correlated with each other in the time domain, or the Doppler offset is fixed within a certain period of time, so there is correlation between the channel information in the time domain. With the method provided by embodiments of the present disclosure, the time domain correlation of the channel information or the Doppler information of the channel can be used to solve the above problem. Enhanced design is performed on the above-mentioned R16 and/or R17 Type II port selection codebook using the Doppler information of the channel, it is possible to enable the network device to calculate precoding matrices at different time points in the future based on the CSI reported once by the terminal. While ensuring data transmission performance, it prevents the terminal from frequently reporting CSI due to rapid movement, reduces the period for the terminal to report CSI, and reduces the uplink feedback overhead of the terminal.

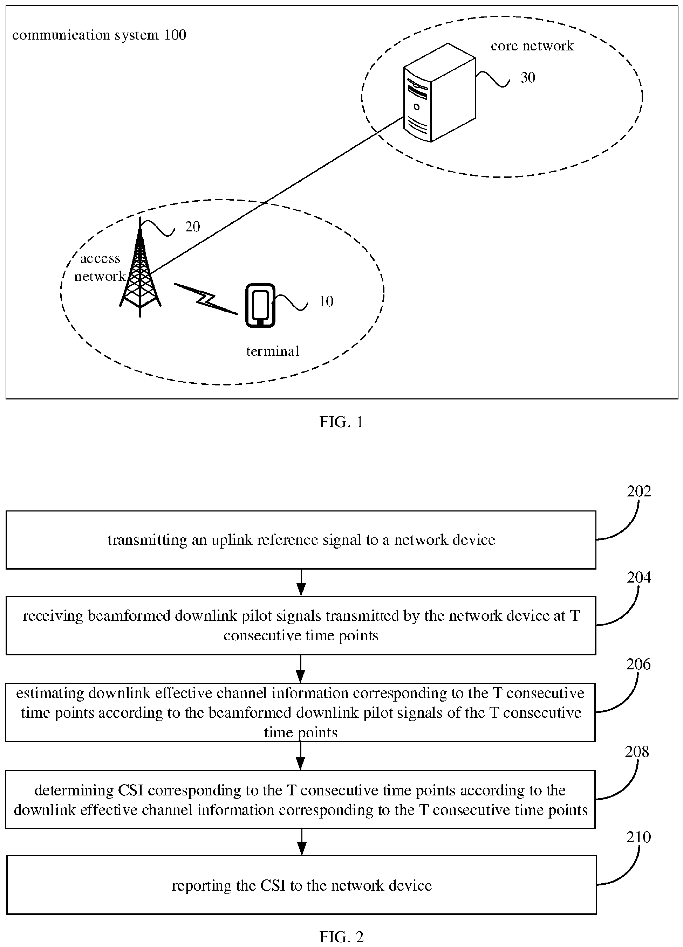

FIG. 1 shows a schematic diagram of a system architecture of a communication system provided by an embodiment of the present disclosure. The system architecture may include: terminal 10, an access network device 20 and a core network device 30.

The terminal 10 may refer to a UE (User Equipment), an access terminal, a user unit, a user station, a mobile station, a mobile platform, a remote station, a remote terminal, a mobile device, a wireless communication device, a user agent or a user device. Optionally, the terminal may also be a cellular phone, a cordless phone, a SIP (Session Initiation Protocol) phone, a WLL (Wireless Local Loop) station, or a PDA (Personal Digital Assistant), a handheld device with a wireless communication function, a computing device or other processing devices connected to a wireless modem, a vehicle-mounted device, a wearable device, a terminal in a 5GS (5th Generation System, fifth-generation mobile communication system) or a future evolved PLMNs (Public Land Mobile Network) terminal, etc., and embodiments of the present disclosure are not limited to this. For convenience of description, the devices mentioned above are collectively referred to as terminals. The number of terminals 10 is usually multiple, and one or more terminals 10 may be distributed in a cell managed by each access network device 20.

The access network device 20 is a device deployed in an access network to provide a wireless communication function for the terminal 10. The access network device 20 may include various forms of macro base stations, micro base stations, relay stations, access points, etc. In systems using different wireless access technologies, the names of devices with an access network device function may be different. For example, in a 5G NR systems, they are called gNodeB or gNB. As communication technology evolves, the name "access network device" may change. For convenience of description, in embodiments of the present disclosure, the above-mentioned devices that provide the wireless communication function for the terminal 10 are collectively referred to as access network devices. Optionally, through the access network device 20, a communication relationship can be established between the terminal 10 and the core network device 30. For example, in an LTE system, the access network device 20 may be a EUTRAN (Evolved Universal Terrestrial Radio Access Network, Evolved Universal Terrestrial Radio Network) or one or more eNodeBs in the EUTRAN; in the 5G NR system, the access network device 20 may be a RAN or one or more gNBs in the RAN.

The functions of the core network device 30 includes providing user connections, user management, and carrying services, and serves as a bearer network to provide an interface to an external network. For example, the core network device in the 5G NR system can include an AMF (Access and Mobility Management Function) entity, a UPF (User Plane Function) entity, an SMF (Session Management Function) entity, a Location Management Function (LMF) entity and other derives. The access network device 20 and the core network device 30 may be collectively referred to as network devices. In embodiments of the disclosure, the core network device 30 is an LMF network element as an example for explanation.

In an example, the access network device 20 and the core network device 30 communicate with each other through some over-the-air technology, such as an NG interface in the 5G NR system. The access network device 20 and the terminal 10 communicate with each other through some over-the-air technology, such as a Uu interface.

FIG. 2 shows a flow chart of a method for reporting CSI provided by an embodiment of the present disclosure. The method can be performed by the terminal shown in FIG. 1. The method includes followings.

Step 202, an uplink reference signal is transmitted to a network device.

Optionally, the uplink reference signal is a sounding reference signal (SRS), which may also be called a channel sounding reference signal.

Step 204, beamformed downlink pilot signals transmitted by the network device at T consecutive time points are received.

A beam used by the beamformed downlink pilot signals is determined based on uplink channel information estimated according to the uplink reference signal. The downlink pilot signal is used by the terminal to determine effective downlink channel information. T is a positive integer. Optionally, the beamformed downlink pilot signal includes at least one of the following:

·a CSI-RS;
·a demodulation reference signal (DMRS); or
·a combination of the CSI-RS and the DMRS.

Optionally, the above parameter T is determined in at least one of the following ways:

·being configured by the network device; or
·being predefined through negotiation between the terminal device and the network device.

Step 206, downlink effective channel information corresponding to the T consecutive time points are estimated according to the beamformed downlink pilot signals of the T consecutive time points.

Optionally, the terminal can estimate the downlink effective channel information at each of the T consecutive time points based on the beamformed downlink pilot signal at each of the T consecutive time points. The downlink effective channel information is information used to reflect characteristics of a downlink channel.

Step 208, CSI corresponding to the T consecutive time points is determined according to the downlink effective channel information corresponding to the T consecutive time points.

The network device can determine a precoding matrix for downlink data transmission based on the CSI determined by the terminal. The CSI can also be called codebook parameter information. Optionally, information in the CSI includes the following two situations.

**First situation**

The CSI includes at least one of the following:

·port selection indication information;
·frequency domain basis vector indication information;
·time domain Doppler component indication information; or
·a combination coefficient indication information.

The port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal. The parameter L, parameter M and parameter K are positive integers. Optionally, the time domain Doppler component indication information is used to indicate K time domain basis vectors selected by the terminal, or K phase offsets. That is, the time domain Doppler component is represented by a phase offset or a basis vector.

Optionally, the above parameter K is determined in at least one of the following ways:

·being configured by the network device;
·being predefined through negotiation between the terminal device and the network device; or
·being determined by the terminal according to the downlink effective channel information.

In a case where the terminal determines the parameter K according to the downlink effective channel information, the terminal reports the parameter K determined by the terminal to the network device.

Optionally, in the case where the parameter T and/or the parameter K are configured by the network device, the parameter T and/or the parameter K are configured for the terminal by the network device through at least one of the following signalings:

·a radio resource control (RRC) signaling;
·a medium access control-control unit (MAC-CE) signaling; or
·downlink control information (DCI).

Optionally, the time domain Doppler component meets at least one of the following conditions:

·in a case where the downlink data transmission is single-layer transmission, time domain Doppler components corresponding to different polarization directions are the same or different;
·time domain Doppler components corresponding to different reference signal ports are the same or different; or
·time domain Doppler components corresponding to different time-frequency components are the same or different.

The time-frequency component is composed of the frequency domain basis vector and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a phase offset between adjacent time points for transmitting the downlink pilot signals; or the time domain Doppler component is represented by a basis vector.

In the case where the time domain Doppler component is represented by a phase offset, if the parameter K is determined by the terminal, the parameter K is determined by the terminal based on a number of non-zero coefficients for each transmission layer.

Optionally, the time domain Doppler component is represented by a basis vector, and the basis vector includes at least one of:

·a discrete Fourier transform (DFT) basis vector;
·a discrete cosine transform (DCT) basis vector; or
·a polynomial basis vector.

**Second situation**

The CSI includes at least one of the following:

·port selection indication information;
·frequency domain basis vector indication information; or
·combination coefficient indication information.

The port selection indication information is used to indicate L reference signal ports selected by the terminal, the frequency domain basis vector indication information is used to indicate M frequency domain basis vectors selected by the terminal, and the combination coefficient indication information is used to indicate T groups of combination coefficients corresponding to the T consecutive time points determined by the terminal. Information on non-zero coefficient positions in matrices of the T groups of combination coefficients are the same, and the parameter L and M are positive integers.

Optionally, each of the above parameters L and M is determined in at least one of the following ways:

·being configured by the network device;
·being predefined through negotiation between the terminal device and the network device; or
·being determined by the terminal according to the downlink channel information.

Optionally, the above reference signal port includes at least one of:

·a channel status information-reference signal (CSI-RS) port; or
·a demodulation reference signal (DMRS) port.

Step 210, the CSI is reported to the network device.

Optionally, the terminal may report all or part of the information in the CSI determined by the terminal to the network device. The CSI is used by the network device to calculate a precoding matrix for downlink data transmission at a time point t. The time point t is after the T consecutive time points. Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

In conclusion, with the method provided in the embodiments, the terminal determines the CSI according to the beamformed downlink pilot signals at the T consecutive time points, and the correlation of the channel information in the time domain can be taken into consideration in the process of determining the CSI. The network device uses the CSI to determine the precoding matrix, which enables the network device to calculate the precoding matrices at different time points in the future based on the CSI reported once by the terminal. While ensuring data transmission performance, it prevents terminal from frequently reporting the CSI due to rapid movement, reduces a period for the terminal to report the CSI, and reduces the uplink feedback overhead of the terminal. Moreover, using beamformed downlink pilot signals to determine CSI can improve the accuracy of determining the CSI.

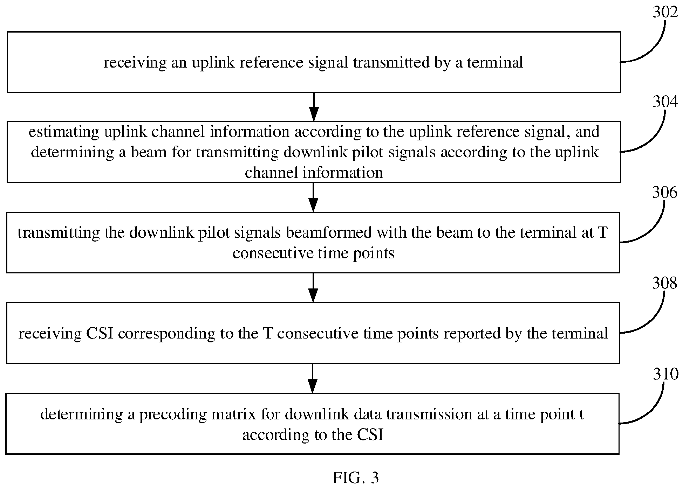

FIG. 3 shows a flow chart of a method for determining a precoding matrix provided by an embodiment of the present disclosure. This method can be performed by the network device shown in FIG. 1. The method includes the followings.

Step 302, an uplink reference signal transmitted by a terminal is received.

Optionally, the uplink reference signal is an SRS.

Step 304, uplink channel information is estimated according to the uplink reference signal, and a beam for transmitting downlink pilot signals is determined according to the uplink channel information.

The network device can estimate the uplink channel information based on the uplink reference signal, thereby calculating the beam. The beam determined by the network device is used to perform beamforming on the downlink pilot signal. Optionally, the downlink pilot signal includes at least one of the following:

- ·a CSI-RS;
- ·a DMRS; or
- ·a combination of the CSI-RS and the DMRS.

Step 306, the downlink pilot signals beamformed with beam is transmitted to the terminal at T consecutive time points.

The beamformed downlink pilot signal is used by the terminal to determine downlink effective channel information. T is a positive integer. Optionally, the above parameter T is determined in at least one of the following ways:

- ·being configured by the network device; or
- ·being predefined through negotiation between the terminal device and the network device.

Optionally, the network device transmits, at the T consecutive time points, the beamformed downlink pilot signals to the terminal using the same pilot signal resource port and the same beam. The same pilot signal resource port includes a port corresponding to the same pilot signal resources, or the same port indexed by different pilot signal resource.

Optionally, the network device transmits, at the T consecutive time points, different beamformed downlink pilot signals to the terminal using the same pilot signal resource port. The same pilot signal resource ports include ports with the same frequency domain position among ports configured with different pilot signal resources.

Step 308, CSI corresponding to the T consecutive time points reported by the terminal are received.

The CSI is determined by the terminal based on the beamformed downlink pilot signals. The terminal may estimate downlink effective channel information at the T consecutive time points based on the beamformed downlink pilot signals at the T consecutive time points. Then, the CSI corresponding to the T consecutive time points are determined based on the downlink effective channel information at the T consecutive time points. Optionally, information in the CSI includes the following two situations.

**First situation**

The CSI includes at least one of the following:

- ·port selection indication information;
- ·frequency domain basis vector indication information;
- ·time domain Doppler component indication information; or
- ·combination coefficient indication information.

The port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal. The parameter L, parameter M and parameter K are positive integers. Optionally, the time domain Doppler component indication information is used to indicate K time domain basis vectors selected by the terminal, or K phase offsets. That is, the time domain Doppler component is represented by a phase offset or a basis vector.

Optionally, the time domain Doppler component meets at least one of the following conditions:

- ·in a case where the downlink data transmission is single-layer transmission, time domain Doppler components corresponding to different polarization directions are the same or different;
- ·time domain Doppler components corresponding to different reference signal ports are the same or different; or
- ·time domain Doppler components corresponding to different time-frequency components are the same or different.

The time-frequency component is composed of the frequency domain basis vector and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a phase offset between adjacent time points for transmitting the downlink pilot signals; or the time domain Doppler component is represented by a basis vector.

In the case where the time domain Doppler component is represented by a phase offset, if the parameter K is determined by the terminal, the parameter K is determined by the terminal based on a number of non-zero coefficients for each transmission layer.

Optionally, the time domain Doppler component is represented by a basis vector, and the basis vector includes at least one of:

·a DFT basis vector;
·a DCT basis vector; or
·a polynomial basis vector.

**Second situation**

The CSI includes at least one of the following:

·port selection indication information;
·frequency domain basis vector indication information; or
·combination coefficient indication information.

The port selection indication information is used to indicate L reference signal ports selected by the terminal, the frequency domain basis vector indication information is used to indicate M frequency domain basis vectors selected by the terminal, and the combination coefficient indication information is used to indicate T groups of combination coefficients corresponding to the T consecutive time points determined by the terminal. Information on non-zero coefficient positions in matrices of the T groups of combination coefficients are the same, and the parameter L and M are positive integers.

Step 310, a precoding matrix for downlink data transmission at a time point t is determined based on the CSI.

The time point t is after the T consecutive time points. Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

The network device may use the above time domain Doppler component in the process of calculating the precoding matrix for downlink data transmission at the time point t based on the CSI. Optionally, for the above first situation of the CSI, the time domain Doppler component is determined by the terminal. For the above second situation of the CSI, the time domain Doppler component is determined by the network device.

In conclusion, with the method provided in the embodiments, the terminal determines the CSI according to the beamformed downlink pilot signals at the T consecutive time points, and the correlation of the channel information in the time domain can be taken into consideration in the process of determining the CSI. The network device uses the CSI to determine the precoding matrix, which enables the network device to calculate the precoding matrices at different time points in the future based on the CSI reported once by the terminal. While ensuring data transmission performance, it prevents terminal from frequently reporting the CSI due to rapid movement, reduces a period for the terminal to report the CSI, and reduces the uplink feedback overhead of the terminal. Moreover, using beamformed downlink pilot signals to determine CSI can improve the accuracy of determining the CSI.

With the method provided by embodiments of the present disclosure, enhanced design of the CSI reporting process can be realized, so that the time domain Doppler component is used for determining the precoding matrix for downlink data transmission. By using the Doppler information of the channel (time domain Doppler component), the correlation in the time domain of the channel information can be taken into account. Using the time domain Doppler component to determine the precoding matrix enables the network device to calculate the precoding matrices at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. The time domain Doppler component can be represented by the phase offset between adjacent time points for the network device transmitting the downlink pilot signals, or it can also be represented by the basis vector. Moreover, the time domain Doppler component can be determined by the terminal or by the network device. The method provided by the disclosure is introduced below through three embodiments.

**1. For the situation where the time domain Doppler component is represented by a phase offset and the terminal determines the time domain Doppler component**

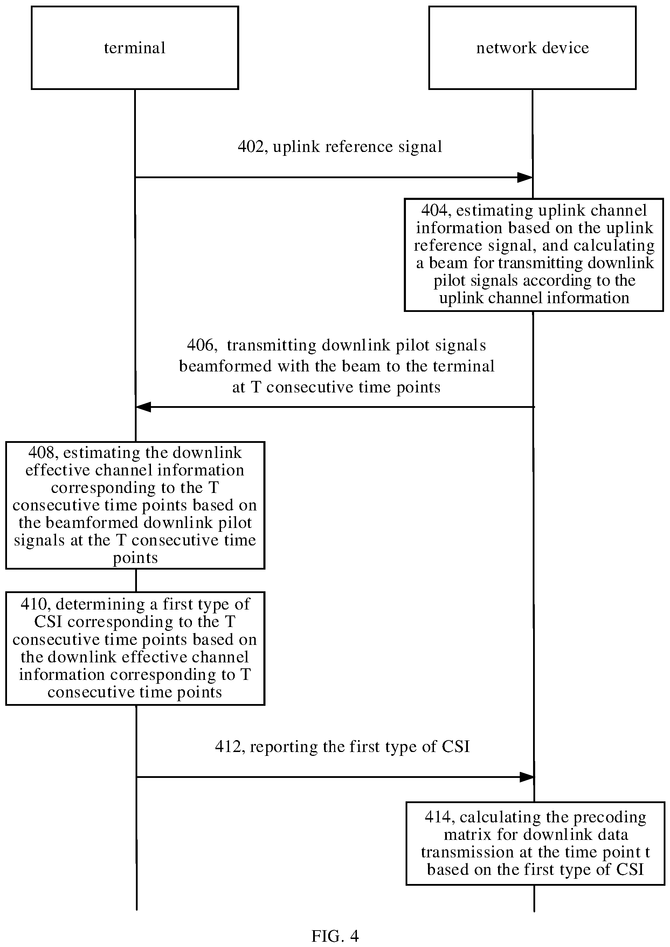

FIG. 4 shows a flow chart of a method for determining a precoding matrix provided by an embodiment of the present disclosure. This method can be applied to the system shown in FIG. 1. The method includes the followings.

Step 402, a terminal transmits an uplink reference signal to a network device.

Optionally, the uplink reference signal is a SRS.

Step 404, the network device estimates uplink channel information based on the uplink reference signal, and calculates a beam for transmitting downlink pilot signals according to the uplink channel information.

The network device can estimate the uplink channel information based on the uplink reference signal, thereby calculating the beam. The beam calculated by the network device is used to perform beamforming on the downlink pilot signal. Optionally, the downlink pilot signal includes at least one of the following:

·a CSI-RS;
·a DMRS; or
·a combination of the CSI-RS and the DMRS.

Step 406, the network device transmits downlink pilot signals beamformed with the beam to the terminal at T consecutive time points.

The beamformed downlink pilot signals are used by the terminal to determine downlink effective channel information. T is a positive integer. Optionally, the above parameter T is determined in at least one of the following ways:

·being configured by the network device; or
·being predefined through negotiation between the terminal device and the network device.

Optionally, the network device transmits, at the T consecutive time points, the beamformed downlink pilot signals to the terminal using the same pilot signal resource port and the same beam. The same pilot signal resource port includes a port corresponding to the same pilot signal resources, or the same port indexed by different pilot signal resource.

Optionally, the network device transmits, at the T consecutive time points, different beamformed downlink pilot signals to the terminal using the same pilot signal resource port. The same pilot signal resource ports include ports with the same frequency domain position among ports configured with different pilot signal resources.

Step 408, the terminal estimates the downlink effective channel information corresponding to the T consecutive time points based on the beamformed downlink pilot signals at the T consecutive time points.

Optionally, the terminal can estimate the downlink effective channel information at each of the T consecutive time points based on the beamformed downlink pilot signal at each of the T consecutive time points. The downlink effective channel information is information used to reflect characteristics of a downlink channel.

Step 410, the terminal determines a first type of CSI corresponding to the T consecutive time points based on the downlink effective channel information corresponding to T consecutive time points.

The network device can determine a precoding matrix for downlink data transmission based on the CSI determined by the terminal. The CSI can also be called codebook parameter information. Optionally, the CSI includes at least one of the following:

·port selection indication information;
·frequency domain basis vector indication information;
·time domain Doppler component indication information; or
·combination coefficient indication information.

The port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal. The parameter L, parameter M and parameter K are positive integers. Optionally, the time domain Doppler component indication information is used to indicate K time domain basis vectors selected by the terminal, or K phase offsets. That is, the time domain Doppler component is represented by a phase offset or a basis vector.

Optionally, each of the above parameters L and M is determined in at least one of the following ways:

·being configured by the network device;
·being predefined through negotiation between the terminal device and the network device; or
·being determined by the terminal according to the downlink channel information.

Optionally, the above reference signal port includes at least one of:

·a CSI-RS port; or
·a DMRS port.

Optionally, the above parameter K is determined in at least one of the following ways:

·being configured by the network device;
·being predefined through negotiation between the terminal device and the network device; or
·being determined by the terminal according to the downlink effective channel information.

In a case where the terminal determines the parameter K according to the downlink effective channel information, the terminal reports the parameter K determined by the terminal to the network device.

Optionally, in the case where the parameter T and/or the parameter K are configured by the network device, the parameter T and/or the parameter K are configured for the terminal by the network device through at least one of the following signalings:

·a RRC signaling;
·a MAC-CE signaling; or
·DCI.

Optionally, the time domain Doppler component meets at least one of the following conditions:

·in a case where the downlink data transmission is single-layer transmission, time domain Doppler components corresponding to different polarization directions are the same or different;
·time domain Doppler components corresponding to different reference signal ports are the same or different; or
·time domain Doppler components corresponding to different time-frequency components are the same or different.

The time-frequency component is composed of the frequency domain basis vector and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a phase offset between adjacent time points for transmitting the downlink pilot signals. In the case where the time domain Doppler component is represented by a phase offset, if the parameter K is determined by the terminal, the parameter K is determined by the terminal based on a number of non-zero coefficients for each transmission layer.

Optionally, the time domain Doppler component is represented by the phase offset, and an expression of the time domain Doppler component is:

$$D = \begin{bmatrix} e^{j\varphi_{1,1}} & \cdots & e^{j\varphi_{1,M}} \\ \vdots & \ddots & \vdots \\ e^{j\varphi_{2L,1}} & \cdots & e^{j\varphi_{1,M}} \end{bmatrix};$$

where, e represents a natural constant and j represents an imaginary number. $\varphi_{x,y}$ represents a phase offset value corresponding to an $x^{th}$ reference signal port and a $y^{th}$ frequency domain basis vector, the parameter L represents a number of the reference signal ports selected by the terminal, and the parameter M represents a number of the frequency domain basis vectors selected by the terminal. The parameter L and the parameter M are positive integers.

Optionally, in a case where the terminal reports the time domain Doppler component to the network device, the terminal reports the phase offset value corresponding to the $x^{th}$ reference signal port and the $y^{th}$ frequency domain basis vector that meets the following condition:

an amplitude of a combination coefficient corresponding to the $x^{th}$ reference signal port and the $y^{th}$ frequency domain basis vector being not 0.

Optionally, the terminal may report the strongest coefficient to the network device.

Step 412, the terminal reports the first type of CSI to the network device.

Optionally, the terminal reports all or part of the information in the CSI determined by the terminal to the network device. The CSI is used by network device to calculate the precoding matrix for downlink data transmission at the time point t, which is after the T consecutive time points. Optionally, when reporting the CSI, the terminal may quantify the information in the CSI.

Step 414, the network device calculates the precoding matrix for downlink data transmission at the time point t based on the first type of CSI.

Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

For the situation where the network device calculates the precoding matrices at the T consecutive time points as the precoding matrix at the time point t

There is a corresponding relationship between the time domain Doppler components and time points. Based on the CSI reported by the terminal, the network device can calculate the precoding matrix corresponding to each time point in the T consecutive time points through the following equation, and determines it as the precoding matrix for downlink data transmission at the time point t:

$$W = \sqrt{a} * W_1(\widetilde{W}_2 \odot D)W_f^H;$$

where, $W_1$ represents a port selection matrix corresponding to the reference signal port, $\widetilde{W}_2$ represents a matrix of the combination coefficients, $W_f$ represents a matrix of the frequency domain basis vectors, $\sqrt{a}$ represents a power normalization factor, and H represents a conjugate transpose of a matrix.

**For the situation where the network device directly calculates the precoding matrix at the time point t**

Optionally, the time intervals between adjacent time points in the T consecutive time points are equal, a time difference between the time point t and the first time point in the T consecutive time points is $\Delta t$, and $\Delta t$ is an integer multiple of the time interval between adjacent time points in the T consecutive time points. Based on the CSI reported by the terminal, the network device can directly calculate the precoding matrix for downlink data transmission at the time point t through the following equations:

$$W_t = \sqrt{c}W_1(\widetilde{W}_2 \odot D')W_f^H;$$

$$D' = \begin{bmatrix} e^{j\Delta t \varphi_{1,1}} & \cdots & e^{j\Delta t \varphi_{1,M}} \\ \vdots & \ddots & \vdots \\ e^{j\Delta t \varphi_{2L,1}} & \cdots & e^{j\Delta t \varphi_{1,M}} \end{bmatrix};$$

where, $W_1$ represents a port selection matrix corresponding to the reference signal port, $\widetilde{W}_2$ represents a matrix of the combination coefficients, $W_f$ represents a matrix of the frequency domain basis vectors, $\sqrt{c}$ represents a power normalization factor, and the parameter L represents the number of the reference signal ports selected by the terminal, the parameter M represents the number of the frequency domain basis vectors selected by the terminal, the parameter L and the parameter M are positive integers, and H represents a conjugate transpose of a matrix.

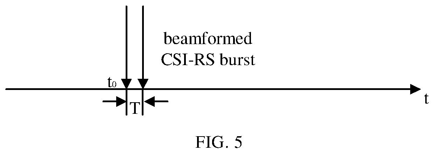

In a specific example, the method provided by the embodiment of the present disclosure is used to optimize the design of the R17 Type II port selection codebook, and the time domain Doppler component is represented by a phase offset. The UE transmits an SRS to a gNB, and the gNB estimates the uplink channel information based on the received SRS, calculates P spatial domain beams, and then transmits beamformed downlink pilot signals to the UE through P CSI-RS ports. For example, FIG. 5 is a schematic diagram of transmitting a CSI-RS provided by an embodiment of the present disclosure. As shown in FIG. 5, the downlink pilot signal used for downlink channel estimation is the CSI-RS. The gNB transmits the beamformed CSI-RS to the UE at T=2 consecutive time points, and defines the beamformed CSI-RS transmitted as a beamformed CSI-RS burst, and the same port uses the same beam for beamforming. For example, data is transmitted through one stream, that is, the transmission rank v=1, the number of transmitting antenna ports is $N_t$, and the number of PMI subbands is $N_3$. The gNB configures the codebook parameters to the UE through RRC signaling to determine that L=2, M=1, and the number of non-zero coefficients is $K_0 = 4$.

The UE estimates downlink effective channel information at the two time points based on the received beamformed CSI-RS burst. For example, if the UE determines a port selection matrix $W_1 \in \mathbb{C}^{N_t \times 4}$ according to the effective channel information at the first time point (the first time point, i.e., time point $t_0$) in the two time points, $W_f$ is

$$\widetilde{W}_{2,\,t_0} = \begin{bmatrix} c_{1,1,t_0} \\ c_{2,1,t_0} \\ c_{3,1,t_0} \\ c_{4,1,t_0} \end{bmatrix}$$

turned off. The UE uses $W_1$ to calculate a matrix of combination coefficients based on downlink information at the first time point, where an amplitude of the combination coefficient is greater than 0. The UE then uses the

$$\widetilde{W}_{2,t_0+1} = \begin{bmatrix} c_{1,1,t_0+1} \\ c_{2,1,t_0+1} \\ c_{3,1,t_0+1} \\ c_{4,1,t_0+1} \end{bmatrix}$$

same $W_1$ to calculate a matrix combination coefficients and the time domain Doppler

$$D = \begin{bmatrix} e^{j\varphi_{1,1}} \\ e^{j\varphi_{2,1}} \\ e^{j\varphi_{3,1}} \\ e^{j\varphi_{4,1}} \end{bmatrix}$$

component based on the downlink information at the second time point (the second time point, i.e., time point $t_0 + 1$) in the two time points, where $\varphi_{x,y} = c_{x,y,t_0+1}/c_{x,y,t_0}$. The UE reports indication information of the $W_1$ (used to indicate $W_1$ to the gNB), quantized matrices of combination coefficients and a quantized time domain Doppler component D to the gNB. The gNB calculates precoding matrices at the time point $t_0$ and the time point $t_0 + 1$ through

$$W = \sqrt{a_2} * W_1(\widetilde{W}_2 \odot D)W_f^H$$

respectively. The precoding matrices can be determined as the precoding matrix for downlink data transmission at the time point t after the T consecutive time points. The gNB can also calculate the precoding matrix at the time point t through $W_t = \sqrt{a_3} W_1(\widetilde{W}_2 \odot D')W_f^H$, where $D' = \begin{bmatrix} e^{j\Delta t\varphi_{1,1}} \\ e^{j\Delta t\varphi_{2,1}} \\ e^{j\Delta t\varphi_{3,1}} \\ e^{j\Delta t\varphi_{4,1}} \end{bmatrix}$, and

$\sqrt{a_x}$ represents a power normalization factor. $\Delta t$ is a relative time difference between the time point t and the time point $t_0$, and $\Delta t$ is an integer multiple of a relative time difference between the time point $t_0$ and the time point $t_0 + 1$.

In a specific example, the method provided by embodiments of the present disclosure is used to optimize the design of the R16 Type II port selection codebook, and the time domain Doppler component is represented by a phase offset. The UE transmits an SRS to the gNB, and the gNB estimates the uplink channel information based on the received SRS, calculates P spatial domain beams, and then transmits s beamformed downlink pilot signals to the UE through P CSI-RS ports. For example, continuing to refer to FIG. 5, the pilot signal used for downlink channel estimation is the CSI-RS. The gNB transmits beamformed CSI-RS bursts to the UE at T=2 consecutive time points, and the same port uses the same beamforming. For example, data is transmitted through one stream, that is, the transmission rank v=1, the number of transmitting antenna ports is Nt, and the number of PMI subbands is $N_3$. The gNB configures the codebook parameters to the UE through RRC signaling to determine that L=2, M=2, and the number of non-zero coefficients is $K_0 = 4$.

The UE estimates downlink effective channel information at the two time points based on the received beamformed CSI-RS burst. For example, if the UE selects L = 2 ports in one polarization direction based on the channel information at the first time point (the first time point, i.e., time point $t_0$) in the two time points, and the UE calculates a FD basis vector, $W_1 \in \mathbb{C}^{P \times 4}$ and $W_f \in \mathbb{C}^{N_3 \times 2}$ can be obtained. The UE uses $W_1$ and $W_f$ to calculate a matrix of

combination coefficients $\tilde{W}_{2,t_0} = \begin{bmatrix} 0 & c_{1,2,t_0} \\ c_{2,1,t_0} & c_{2,2,t_0} \\ 0 & 0 \\ c_{4,1,t_0} & 0 \end{bmatrix}$ at the time point t0, where $c_{2,1,t_0}$ $c_{4,1,t_0}$, $c_{1,2,t_0}$, and $c_{2,2,t_0}$ are

complex numbers, and their amplitudes are greater than 0. The UE then uses the same $W_1$ and $W_f$ to calculate a matrix of

$$\widetilde{W}_{2,t_0+1} = \begin{bmatrix} 0 & c_{1,2,t_0+1} \\ c_{2,1,t_0+1} & c_{2,2,t_0+1} \\ 0 & 0 \\ c_{4,1,t_0+1} & 0 \end{bmatrix}$$

combination coefficients at the second time point (the second time point, that is,

$$D = \begin{bmatrix} 0 & e^{j\varphi_{1,2}} \\ e^{j\varphi_{2,1}} & e^{j\varphi_{2,2}} \\ 0 & 0 \\ e^{j\varphi_{4,1}} & 0 \end{bmatrix}$$

time point $t_0 + 1$) in the two time points, and calculate the time domain Doppler component , where $\varphi_{x,y} = c_{x,y,t_0+1}/c_{x,y,t_0}$ . The UE reports indication information of the $W_1$ and $W_f$, quantized matrices of combination coefficients and a quantized time domain Doppler component D to the gNB. The gNB calculates precoding matrices at the

time point $t_0$ and time point $t_0 + 1$ respectively through $W = \sqrt{a} * W_1 \tilde{W}_2 W_f^H$ and $W = \sqrt{b} * W_1 (\tilde{W}_2 \odot D) W_f^H$ .
The precoding matrices can be used as the precoding matrix for downlink data transmission at time point t after the T consecutive time points. The gNB can also calculate the precoding matrix at the time point t through

$$W_t = \sqrt{c} W_1 (\tilde{W}_2 \odot D') W_f^H$$ , where $$D' = \begin{bmatrix} 0 & e^{j\Delta t \varphi_{1,2}} \\ e^{j\Delta t \varphi_{2,1}} & e^{j\Delta t \varphi_{2,2}} \\ 0 & 0 \\ e^{j\Delta t \varphi_{4,1}} & 0 \end{bmatrix}$$ , and $\sqrt{a}$, $\sqrt{b}$, and $\sqrt{c}$, represent power

normalization factors. $\Delta t$ is a relative time difference between the time point t and the time point t0, and $\Delta t$ is an integer multiple of a relative time difference between the time point $t_0$ and the time point $t_0 + 1$.

In summary, with the method provided in this embodiment, the terminal determines the time domain Doppler component based on the beamformed downlink pilot signals at the T consecutive time points, which can take the correlation of the channel information in the time domain into consideration in the process of determining the CSI. The network device uses the time domain Doppler component to determine the precoding matrix, which enables the network device to calculate the precoding matrix at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. Moreover, using the beamformed downlink pilot signals to determine the CSI can improve the accuracy of determining the CSI. In addition, determining the time domain Doppler component represented by the phase offset provides a way to determine the time domain Doppler component.

## 2. For the situation where the time domain Doppler component is represented by a basis vector and the terminal determines the time domain Doppler component

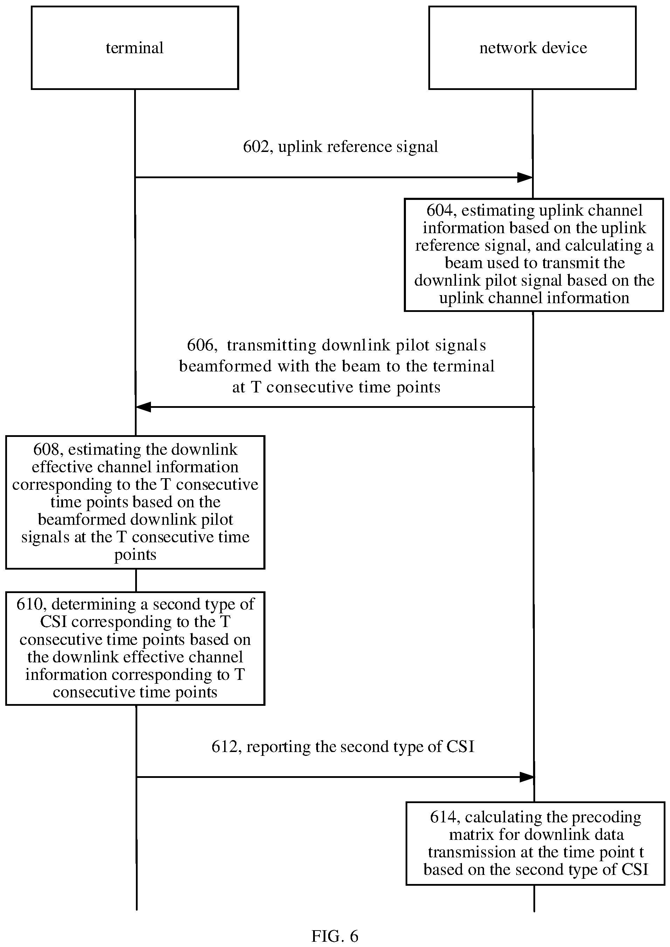

FIG. 6 shows a flow chart of a method for determining a precoding matrix provided by an embodiment of the present disclosure. This method can be applied to the system shown in FIG. 1. The method includes the followings.
Step 602, a terminal transmits an uplink reference signal to a network device.
Optionally, the uplink reference signal is a SRS.
Step 604, the network device estimates uplink channel information based on the uplink reference signal, and calculates a beam used to transmit the downlink pilot signal based on the uplink channel information.
The network device can estimate the uplink channel information based on the uplink reference signal, thereby calculating the beam. The beam calculated by the network device is used to perform beamforming on the downlink pilot signal. Optionally, the downlink pilot signal includes at least one of the following:

·a CSI-RS;
·a DMRS; or
·a combination of the CSI-RS and the DMRS.

Step 606, the network device transmits downlink pilot signals beamformed with the beam to the terminal at T consecutive time points.

The beamformed downlink pilot signals are used by the terminal to determine downlink effective channel information. T is a positive integer. Optionally, the above parameter T is determined in at least one of the following ways:

·being configured by the network device; or
·being predefined through negotiation between the terminal device and the network device.

Optionally, the network device transmits, at the T consecutive time points, the beamformed downlink pilot signals to the terminal using the same pilot signal resource port and the same beam. The same pilot signal resource port includes a port corresponding to the same pilot signal resources, or the same port indexed by different pilot signal resource.

Optionally, the network device transmits, at the T consecutive time points, different beamformed downlink pilot signals to the terminal using the same pilot signal resource port. The same pilot signal resource ports include ports with the same frequency domain position among ports configured with different pilot signal resources.

Step 608, the terminal estimates the downlink effective channel information corresponding to the T consecutive time points based on the beamformed downlink pilot signals at the T consecutive time points.

Optionally, the terminal can estimate the downlink effective channel information at each of the T consecutive time points based on the beamformed downlink pilot signal at each of the T consecutive time points. The downlink effective channel information is information used to reflect the characteristics of the downlink channel.

Step 610, the terminal determines a second type of CSI corresponding to the T consecutive time points based on the downlink effective channel information corresponding to T consecutive time points.

The network device can determine the precoding matrix for downlink data transmission based on the CSI determined by the terminal. CSI can also be called codebook parameter information. Optionally, the CSI includes at least one of the following information:

·port selection indication information;
·frequency domain basis vector indication information;
·time domain Doppler component indication information; or
·combination coefficient indication information.

The port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal. The parameter L, parameter M and parameter K are positive integers. Optionally, the time domain Doppler component indication information is used to indicate K time domain basis vectors selected by the terminal, or K phase offsets. That is, the time domain Doppler component is represented by a phase offset or a basis vector.

Optionally, each of the above parameters L and M is determined in at least one of the following ways:

·being configured by the network device;
·being predefined through negotiation between the terminal device and the network device; or
·being determined by the terminal according to the downlink channel information.

Optionally, the above reference signal port includes at least one of:

·a CSI-RS port; or
·a DMRS port.

Optionally, the above parameter K is determined in at least one of the following ways:

·being configured by the network device;
·being predefined through negotiation between the terminal device and the network device; or
·being determined by the terminal according to the downlink effective channel information.

In a case where the terminal determines the parameter K according to the downlink effective channel information, the terminal reports the parameter K determined by the terminal to the network device.

Optionally, in the case where the parameter T and/or the parameter K are configured by the network device, the parameter T and/or the parameter K are configured for the terminal by the network device through at least one of the following signalings:

- ·a RRC signaling;
- ·a MAC-CE signaling; or
- ·DCI.

Optionally, the time domain Doppler component meets at least one of the following conditions:

- ·in a case where the downlink data transmission is single-layer transmission, time domain Doppler components corresponding to different polarization directions are the same or different;
- ·time domain Doppler components corresponding to different reference signal ports are the same or different; or
- ·time domain Doppler components corresponding to different time-frequency components are the same or different.

The time-frequency component is composed of the frequency domain basis vector and the time domain Doppler component. Since there are usually two polarization directions, the time domain Doppler components corresponding to the two polarization directions are the same or different. The above-mentioned polarization direction refers to a polarization direction in which the network device transmits data to the terminal.

Optionally, in a case where the downlink data transmission is multi-layer transmission, time domain Doppler components corresponding to different transmission layers are the same or different. Multi-layer transmission means there are multiple transmission layers, which are used by the network device to map codewords to ports.

Optionally, the time domain Doppler component is represented by a basis vector. The basis vector includes at least one of:

- ·a DFT basis vector;
- ·a DCT basis vector; or
- ·a polynomial basis vector.

Optionally, by introducing parameter $O_3$, oversampling expansion can be performed on the time domain Doppler component to obtain more basis vector information.

Optionally, the time domain Doppler component is represented by a basis vector. An expression of the time domain Doppler component is as follows:

$$W_d = [f_{d,1} \quad ... \quad f_{d,K}];$$

where, K basis vectors in $W_d$ are selected by the terminal from candidate basis vectors; or, the K basis vectors in $W_d$ are fixed or predefined basis vectors. Optionally, the terminal indicates the selected K time domain Doppler components to the network device through combining coefficients or bitmaps.

Step 612, the terminal reports the second type of CSI to the network device.

Optionally, the terminal may report all or part of the information in the CSI determined by the terminal to the network device. The CSI is used by network device to calculate the precoding matrix for downlink data transmission at the time point t, which is after the T consecutive time points. Optionally, when reporting the CSI, the terminal quantifies the information in the CSI.

Step 614, the network device calculates the precoding matrix for downlink data transmission at the time point t based on the second type of CSI.

Optionally, the network device calculates the precoding matrix for downlink data transmission at each of the T consecutive time points according to the CSI reported by the terminal as the precoding matrix at the time point t. The network device can also directly calculate the precoding matrix at the time point t based on the CSI reported by the terminal.

**For the situation where the network device calculates the precoding matrix at the T consecutive time points as the precoding matrix at the time point t**

There is a correspondence between the time domain Doppler component and time points. Based on the CSI reported by the terminal, the network device can calculate the precoding matrix corresponding to each time point in the T consecutive time points through the following equation, and determines it as the precoding for downlink data transmission at the time point t matrix:

$$W = \sqrt{b}\,W_1\widetilde{\widetilde{W}}_2(W_d \otimes W_f)^H;$$

where, $W_1$ represents a port selection matrix corresponding to the reference signal port, $\widetilde{\widetilde{W}}_2$ represents a matrix of the combination coefficients, $W_f$ represents a matrix of the frequency domain basis vectors, $\sqrt{b}$ represents a power normalization factor, and H represents a conjugate transpose of a matrix.

**For the situation where the network device directly calculates the precoding matrix at the time point t**

Optionally, the time domain Doppler component is represented by a DFT basis vector. The time intervals between adjacent time points in the T consecutive time points are equal, t=T+n, which indicates that the time point t is after the last time point in the T time points, with a time interval from the last time point in the T time points being n times of a target time interval. The target time interval is the time interval between adjacent time points in the T consecutive time points, and n is a positive integer. Based on the CSI reported by the terminal, the network device can directly calculate the precoding matrix for downlink data transmission at the time point t through the following equation:

$$W_t = \sqrt{d}\,W_1\widetilde{\widetilde{W}}_2\left(\begin{bmatrix} f_{d,1}((t-T)\bmod T)e^{j\frac{2\pi k_1\left\lfloor\frac{t-T}{T}\right\rfloor+1}{O_3}} \\ \vdots \\ f_{d,K}((t-T)\bmod T)e^{j\frac{2\pi k_K\left\lfloor\frac{t-T}{T}\right\rfloor+1}{O_3}} \end{bmatrix} \otimes W_f\right)^H;$$

where, $W_1$ represents a port selection matrix corresponding to the reference signal port, $\widetilde{\widetilde{W}}_2$ represents a matrix of the combination coefficients, $W_f$ represents a matrix of the frequency domain basis vectors, $f_{d,k}(T)$ represents elements in a $T^{th}$ row of the DFT basis vector, $k_K$ represents an index value of a $K^{th}$ DFT basis vector, $\sqrt{d}$ represents a power normalization factor, $O_3$ represents an oversampling factor, and H represents a conjugate transpose of a matrix.

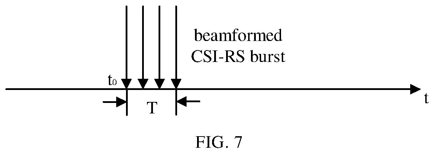

In a specific example, the method provided by the embodiment of the present disclosure is used to optimize the design of the R17 Type II port selection codebook, and the time domain Doppler component is represented by a basis vector. The UE transmits an SRS to a gNB, and the gNB estimates the uplink channel information based on the received SRS, calculates P spatial domain beams, and then transmits beamformed downlink pilot signals to the UE through P CSI-RS ports. For example, FIG. 7 is a schematic diagram of transmitting a CSI-RS provided by an embodiment of the present disclosure. As shown in FIG. 7, the pilot signal used for downlink channel estimation is the CSI-RS. The gNB transmits beamformed CSI-RS bursts to the UE at T=4 consecutive time points. The same port uses the same beamforming. For example, data is transmitted through one stream, that is, the transmission rank v=1, the number of transmitting antenna ports $N_t$ = 16, and the number of PMI subbands is $N_3$. The gNB configures the codebook parameters to the UE through RRC signaling to determine that L=2, M=2, and the number of reported combination coefficients is $K_0$ = 8. The time domain Doppler component is represented by K=2 DFT basis vectors, and oversampling is not performed on the basis vector of the time domain Doppler component, that is, the parameter $O_3$ corresponding to the DFT basis vector is 1.

The UE estimates the downlink effective channel information at these four time points based on the received CSI-RS bursts. For example, if a port selected by the UE based on the channel information at the first time point (the first time point, i.e., time point $t_0$) in the four time points is represented as $W_1 \in \mathbb{C}^{N_t \times 4}$, and $W_f$ is represented by M=2 FD basis vectors. The UE uses $W_1$ and $W_f$ to calculate a matrix of combination coefficients

$$\widetilde{\widetilde{W}}_{2,t_0} = \begin{bmatrix} c_{1,1,t_0} & c_{1,2,t_0} \\ c_{2,1,t_0} & c_{2,2,t_0} \\ c_{3,1,t_0} & c_{3,2,t_0} \\ c_{4,1,t_0} & c_{4,2,t_0} \end{bmatrix}$$ based

on the downlink information at the first time point. Similarly, the UE uses the same $W_1$ and $W_f$ to calculate matrices of

combination coefficients $\widetilde{\widetilde{W}}_{2,t_0+1}$, $\widetilde{\widetilde{W}}_{2,t_0+2}$, and $\widetilde{\widetilde{W}}_{2,t_0+3}$, corresponding to the remaining three time points except the first time point. $\widetilde{\widetilde{W}}_{2,t_0}$ is represented by defining $v_{t_0} = [c_{1,1,t_0}\ c_{1,2,t_0}\ c_{2,1,t_0} \cdots c_{4,1,t_0}\ c_{4,2,t_0}]^T$. Similarly, $v_{t_0+1}$, $v_{t_0+2}$, and $v_{t_0+3}$ can be obtained. $V = \begin{bmatrix} v_{t_0}^T & \cdots & v_{t_0+3}^T \end{bmatrix}$, then the time domain Doppler component

$$W_d = [f_{d,1} \quad \cdots \quad f_{d,K}] \in \mathbb{C}^{T \times K}$$ can be calculated based on $\max_{f_{d,k}} \left\| V f_{d,k} \right\|_2$. The UE can determine the

combination coefficients $\widetilde{\widetilde{W}}_2 \in \mathbb{C}^{8 \times 2}$ according to the downlink effective channel information at the T consecutive time points and $W_1$, $W_f$, and $W_d$, and then $K_0 = 8$ non-zero coefficients are selected to report. The UE reports indication information of $W_1$ and $W_f$, quantized matrices of combination coefficients and the time domain Doppler component $W_d$ to the gNB. The gNB can calculate the precoding matrix corresponding to each time point in the T consecutive time points through $W = \sqrt{b} W_1 \widetilde{\widetilde{W}}_2 (W_d \otimes W_f)^H$. The precoding matrices can be used as the precoding matrix for downlink data transmission at the time point t after the T consecutive time points. In addition, the gNB can also calculate the precoding

$$W_t = \sqrt{d} W_1 \widetilde{\widetilde{W}}_2 \left( \begin{bmatrix} f_{d,1}((t-T) \bmod T) e^{j\frac{2\pi k_1 \left\lfloor \frac{t-T}{T} \right\rfloor + 1}{O_3}} \\ \vdots \\ f_{d,K}((t-T) \bmod T) e^{j\frac{2\pi k_K \left\lfloor \frac{t-T}{T} \right\rfloor + 1}{O_3}} \end{bmatrix} \otimes W_f \right)^H$$, where,

matrix at the time point t through t=T+n means that the time point t is after the last time point in the T time points, with a time interval from the last time point in the T time points being n times of a target time interval. The target time interval is the time interval between adjacent time points in the T consecutive time points. The $f_{d,k}(T)$ represents the elements corresponding to the $T^{th}$ row of the basis vector.

It should be noted that the method provided by the embodiments of the present disclosure can also be used to optimize the design of the R16 Type II port selection codebook, and the time domain Doppler component is represented by a basis vector. For the specific implementation process, reference may be made to the above embodiments in which the R17 Type II port selection codebook is optimized and the time domain Doppler component is represented by a basis vector. The disclosure will not go into details.

In summary, with the method provided in this embodiment, the terminal determines the time domain Doppler component based on the beamformed downlink pilot signals at the T consecutive time points, which can take the correlation of the channel information in the time domain into consideration in the process of determining the CSI. The network device uses the time domain Doppler component to determine the precoding matrix, which enables the network device to calculate the precoding matrix at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. Moreover, using the beamformed downlink pilot signals to determine the CSI can improve the accuracy of determining the CSI. In addition, determining the time domain Doppler component represented by the basis vector provides a way to determine the time domain Doppler component.

### 3. For the situation where the time domain Doppler is determined by the network device

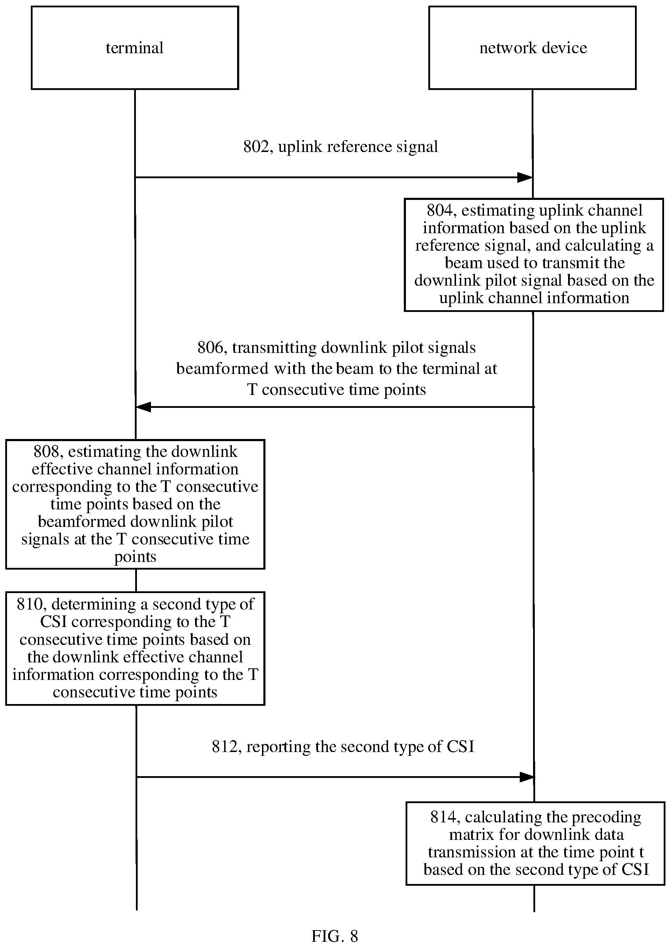

FIG. 8 shows a flow chart of a method for determining a precoding matrix provided by an embodiment of the present disclosure. This method can be applied to the system shown in FIG. 1. The method includes the followings.

Step 802, a terminal transmits an uplink reference signal to a network device.

Optionally, the uplink reference signal is a SRS.

Step 804, the network device estimates uplink channel information based on the uplink reference signal, and calculates a beam used to transmit the downlink pilot signal based on the uplink channel information.

The network device can estimate the uplink channel information based on the uplink reference signal, thereby calculating the beam. The beam calculated by the network device is used to perform beamforming on the downlink pilot signal. Optionally, the downlink pilot signal includes at least one of the following:

·a CSI-RS;
·a DMRS; or
·a combination of the CSI-RS and the DMRS.

Step 806, the network device transmits downlink pilot signals beamformed with the beam to the terminal at T consecutive time points.
The beamformed downlink pilot signals are used by the terminal to determine downlink effective channel information. T is a positive integer. Optionally, the above parameter T is determined in at least one of the following ways:

·being configured by the network device; or
·being predefined through negotiation between the terminal device and the network device.

Optionally, the network device transmits, at the T consecutive time points, the beamformed downlink pilot signals to the terminal using the same pilot signal resource port and the same beam. The same pilot signal resource port includes a port corresponding to the same pilot signal resources, or the same port indexed by different pilot signal resource.
Optionally, the network device transmits, at the T consecutive time points, different beamformed downlink pilot signals to the terminal using the same pilot signal resource port. The same pilot signal resource ports include ports with the same frequency domain position among ports configured with different pilot signal resources.
Step 808, the terminal estimates the downlink effective channel information corresponding to the T consecutive time points based on the beamformed downlink pilot signals at the T consecutive time points.
Optionally, the terminal can estimate the downlink effective channel information at each of the T consecutive time points based on the beamformed downlink pilot signal at each of the T consecutive time points. The downlink effective channel information is information used to reflect the characteristics of the downlink channel.
Step 810, the terminal determines a third type of CSI corresponding to the T consecutive time points based on the downlink effective channel information corresponding to the T consecutive time points.
The network device can determine the precoding matrix for downlink data transmission based on the CSI determined by the terminal. CSI can also be called codebook parameter information. Optionally, the CSI includes at least one of the following information:

·port selection indication information;
·frequency domain basis vector indication information; or
·combination coefficient indication information.

The port selection indication information is used to indicate L reference signal ports selected by the terminal, the frequency domain basis vector indication information is used to indicate M frequency domain basis vectors selected by the terminal, and the combination coefficient indication information is used to indicate T groups of combination coefficients corresponding to the T consecutive time points determined by the terminal. Information on non-zero coefficient positions in matrices of the T groups of combination coefficients are the same, and the parameter L and the parameter M are positive integers.
Optionally, each of the above parameters L and M is determined in at least one of the following ways:

·being configured by the network device;
·being predefined through negotiation between the terminal device and the network device; or
·being determined by the terminal according to the downlink channel information.

Optionally, in the case where the parameter T is configured by the network device, the parameter T is configured for the terminal by the network device through at least one of the following signalings:

·a RRC signaling;
·a MAC-CE signaling; or
·DCI.

Optionally, the above reference signal port includes at least one of:

·a CSI-RS port; or
·a DMRS port.

Step 812, the terminal reports the third type of CSI to the network device.

Optionally, the terminal may report all or part of the information in the CSI determined by the terminal to the network device. The CSI is used by network device to calculate the precoding matrix for downlink data transmission at the time point t, which is after the T consecutive time points. Optionally, when reporting the CSI, the terminal quantifies the information in the CSI.

Step 814, the network device calculates the precoding matrix for downlink data transmission at the time point t based on the third type of CSI.

Optionally, the network device calculates the precoding matrix for downlink data transmission at each of the T consecutive time points according to the CSI reported by the terminal as the precoding matrix at the time point t. Optionally, the network device can calculate the precoding matrix for downlink data transmission at the time point t according to the CSI reported by the terminal through at least one of the following equations:

$$W = \sqrt{a} * W_1\left(\tilde{W}_2 \odot D\right)W_f^H;$$

$$W = \sqrt{b}\,W_1\tilde{\tilde{W}}_2\left(W_d \otimes W_f\right)^H;$$

where, $W_1$ represents a port selection matrix corresponding to the reference signal port, $\tilde{W}_2$ and $\tilde{\tilde{W}}_2$ represent matrices of the combination coefficients, $W_f$ represents a matrix of the frequency domain basis vectors, D includes the time domain Doppler components represented by the phase offsets between adjacent time points for transmitting the beamformed downlink pilot signals, $W_d$ includes the time domain Doppler components represented by the basis vectors, D, $\tilde{W}_2$, $\tilde{\tilde{W}}_2$ and $W_d^H$ are determined according to T groups of combination coefficients, $\sqrt{a}$ and $\sqrt{b}$ represents power normalization factors, and H represents a conjugate transpose of a matrix.

In conclusion, with the method provided by this embodiment, the terminal determines the T groups of combination coefficients based on the beamformed downlink pilot signals at the T consecutive time points, and reports the CSI to the network device, which can take the correlation of the channel information in the time domain into consideration in the process of determining the CSI. The network device determines the precoding matrix by determining the time domain Doppler component, which enables the network device to calculate the precoding matrix at different time points in the future based on the CSI reported once by the terminal. While ensuring data transmission performance, it prevents the terminal from frequently reporting the CSI due to rapid movement, reduces the period for the terminal to report the CSI, and reduces the uplink feedback overhead of the terminal. Moreover, using the beamformed downlink pilot signals to determine the CSI can improve the accuracy of determining the CSI. In addition, by allowing the network device to determine the time domain Doppler component, the uplink feedback overhead of the terminal can be further reduced.

It should be noted that the sequence of the method steps provided by the embodiments of the present disclosure can be adjusted appropriately, and the steps can also be added or deleted accordingly according to the situation. Changed methods that can be easily found within the technical scope disclosed in the present disclosure by those skilled in the art should be included in the scope of protection of this disclosure, and therefore will not be repeated.

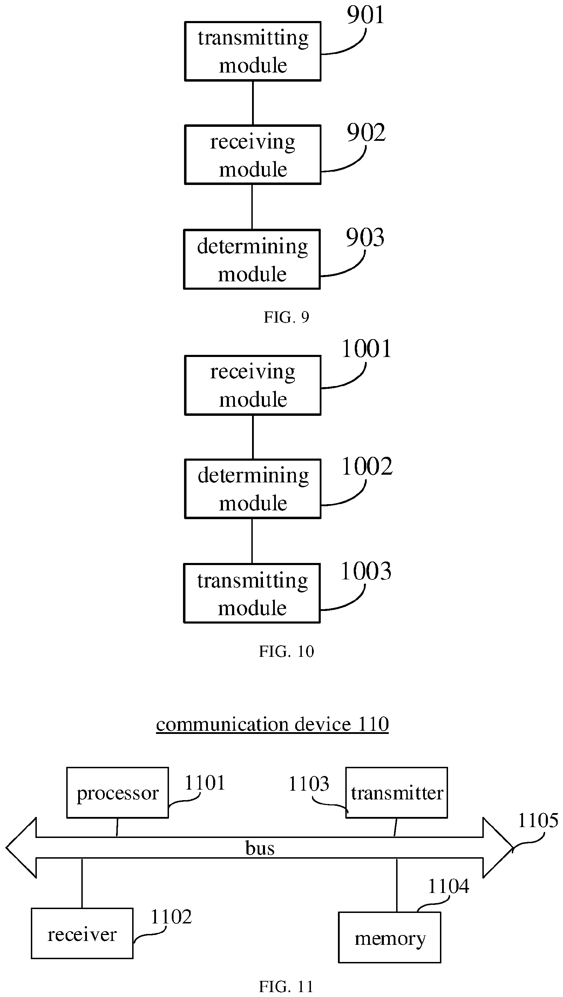

FIG. 9 shows a block diagram of an apparatus for reporting CSI provided by an embodiment of the present disclosure. As shown in FIG. 9, the device includes:

a transmitting module 901, configured to transmit an uplink reference signal to a network device;
a receiving module 902, configured to receive beamformed downlink pilot signals transmitted by the network device at T consecutive time points; and
a determining module 903, configured to estimate downlink effective channel information corresponding to the T consecutive time points according to the beamformed downlink pilot signals of the T consecutive time point.

The determining module 903 is also configured to determine CSI corresponding to the T consecutive time points according to the downlink effective channel information corresponding to the T consecutive time points.

The transmitting module 901 is also configured to report the CSI to the network device.

A beam used by the beamformed downlink pilot signals is determined based on uplink channel information estimated according to the uplink reference signal, and the CSI is used by the network device to determine a precoding matrix for downlink data transmission at a time point t, in which the time point t is after the T consecutive time points, and T is a positive integer.

In an optional design, the CSI includes at least one of:

port selection indication information;
frequency domain basis vector indication information;
time domain Doppler component indication information; or
combination coefficient indication information.

The port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal, in which the parameter L, the parameter M and the parameter K are positive integers.

In an optional design, the CSI includes at least one of the following information:

port selection indication information;
frequency domain basis vector indication information; or
combination coefficient indication information.

The port selection indication information is used to indicate L reference signal ports selected by the terminal, the frequency domain basis vector indication information is used to indicate M frequency domain basis vectors selected by the terminal, and the combination coefficient indication information is used to indicate T groups of combination coefficients corresponding to the T consecutive time points determined by the terminal, in which information on non-zero coefficient positions in matrices of the T groups of combination coefficients are the same, and the parameter L and the parameter M are positive integers.

In an optional design, the parameter K is determined in at least one of the following ways:

being configured by the network device;
being predefined through negotiation between the terminal device and the network device; or
being determined by the terminal according to the downlink effective channel information.

In an optional design, the transmitting module 901 is used to:
in a case where the terminal determines the parameter K according to the downlink effective channel information, report the parameter K determined by the terminal to the network device.

In an optional design, the time domain Doppler component is represented by a phase offset between adjacent time points for transmitting the downlink pilot signals; or, the time domain Doppler component is represented by a basis vector.

In an optional design, in a case where the time domain Doppler component is represented by the phase offset, the parameter K is determined by the terminal according to a number of non-zero coefficients for each transmission layer.

In an optional design, the time domain Doppler component meets at least one of following conditions:

in a case where the downlink data transmission is single-layer transmission, time domain Doppler components corresponding to different polarization directions are the same or different;
time domain Doppler components corresponding to different reference signal ports are the same or different; or
time domain Doppler components corresponding to different time-frequency components are the same or different.

The time-frequency component is composed of the frequency domain basis vector and the time domain Doppler component.

In an optional design, in a case where the downlink data transmission is multi-layer transmission, time domain Doppler components corresponding to different transmission layers are the same or different.

In an optional design, the time domain Doppler component is represented by the phase offset. The expression of the time domain Doppler component is as follows:

$$D = \begin{bmatrix} e^{j\varphi_{1,1}} & \cdots & e^{j\varphi_{1,M}} \\ \vdots & \ddots & \vdots \\ e^{j\varphi_{2L,1}} & \cdots & e^{j\varphi_{1,M}} \end{bmatrix};$$

where, $\varphi_{x,y}$ represents a phase offset value corresponding to an $x^{th}$ reference signal port and a $y^{th}$ frequency domain basis vector, the parameter L represents a number of the reference signal ports selected by the terminal, and the parameter M represents a number of the frequency domain basis vectors selected by the terminal, and in which the parameter L and the parameter M are positive integers.

In an optional design, the transmitting module 901 is used to:

in a case of reporting the time domain Doppler component to the network device, reporting the phase offset value corresponding to the $x^{th}$ reference signal port and the $y^{th}$ frequency domain basis vector that meets the following condition: an amplitude of a combination coefficient corresponding to the $x^{th}$ reference signal port and the $y^{th}$ frequency domain basis vector being not 0.

In an optional design, the time domain Doppler component is represented by the basis vector, and the expression of the time domain Doppler component is as follows:

$$W_d = [f_{d,1} \quad ... \quad f_{d,K}];$$

where, K basis vectors in $W_d$ are selected by the terminal from candidate basis vectors; or, the K basis vectors in $W_d$ are fixed or predefined basis vectors.

In an optional design, the time domain Doppler component is represented by a basis vector, and the basis vector includes at least one of the following:

a DFT basis vector;
a DCT basis vector; or
a polynomial basis vector.

In an optional design, the parameter T is determined in at least one of the following ways:

being configured by the network device; or
being predefined through negotiation between the terminal device and the network device.

In an optional design, in a case where the parameter T and/or the parameter K are configured by the network device, the parameter T and/or the parameter K are configured for the terminal by the network device through at least one of following signalings:

a RRC signaling;
a MAC-CE signaling; or
DCI.

In an optional design, the reference signal port includes at least one of the following:

a CSI-RS port; or
a DMRS port.

In an optional design, the downlink pilot signal includes at least one of the following:

a CSI-RS;
a DMRS; or
a combination of CSI-RS and DMRS.

In an optional design, the uplink reference signal is an SRS.

FIG. 10 shows a block diagram of a device for determining a precoding matrix provided by an embodiment of the present disclosure. As shown in FIG. 10, the device includes:

a receiving module 1001, configured to receive an uplink reference signal transmitted by a terminal;
a determining module 1002, configured to uplink channel information according to the uplink reference signal, and determine a beam for transmitting downlink pilot signals according to the uplink channel information;
a transmitting module 1003 is configured to transmit the downlink pilot signals beamformed with the beam to the terminal at T consecutive time points.

The receiving module 1001 is also used to receive CSI corresponding to the T consecutive time points reported by the terminal.

The determining module 1002 is also used to determine a precoding matrix for downlink data transmission at a time point t according to the CSI.

The CSI is determined by the terminal according to the beamformed downlink pilot signals, the time point t is after the T consecutive time points, and T is a positive integer.

In an optional design, transmitting module 1003 is used to:

transmit, at the T consecutive time points, the beamformed downlink pilot signals to the terminal using the same pilot signal resource port and the same beam;

in which, the same pilot signal resource port includes a port corresponding to same pilot signal resources, or the same port indexed by different pilot signal resources.

In an optional design, the transmitting module 1003 is used to:

transmit, at the T consecutive time points, different beamformed downlink pilot signals to the terminal using the same pilot signal resource port;

in which the same pilot signal resource port includes ports with the same frequency domain position among ports configured with different pilot signal resources.

In an optional design, the CSI includes at least one of the following information:

port selection indication information;
frequency domain basis vector indication information;
time domain Doppler component indication information; or
combination coefficient indication information.

The port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal, in which the parameter L, the parameter M and the parameter K are positive integers.

In an optional design, the CSI includes at least one of the following information:

port selection indication information;
frequency domain basis vector indication information; or
combination coefficient indication information;

The port selection indication information is used to indicate L reference signal ports selected by the terminal, the frequency domain basis vector indication information is used to indicate M frequency domain basis vectors selected by the terminal, and the combination coefficient indication information is used to indicate T groups of combination coefficients corresponding to the T consecutive time points determined by the terminal, in which information on non-zero coefficient positions in matrices of the T groups of combination coefficients are the same, and the parameter L and the parameter M are positive integers.

In an optional design, the time domain Doppler component is represented by a phase offset between adjacent time points for transmitting the downlink pilot signals; or the time domain Doppler component is represented by a basis vector.

In an optional design, the time domain Doppler component is represented by a phase offset. The expression of the time domain Doppler component is as follows:

$$ D = \begin{bmatrix} e^{j\varphi_{1,1}} & \cdots & e^{j\varphi_{1,M}} \\ \vdots & \ddots & \vdots \\ e^{j\varphi_{2L,1}} & \cdots & e^{j\varphi_{1,M}} \end{bmatrix}; $$

in which, $\varphi_{x,y}$ represents a phase offset value corresponding to an $x^{th}$ reference signal port and a $y^{th}$ frequency domain basis vector, the parameter L represents a number of the reference signal ports selected by the terminal, and the parameter M represents a number of the frequency domain basis vectors selected by the terminal. The parameter L and the parameter M are positive integers.

In an optional design, the time domain Doppler component is represented by a basis vector, and the expression of the time domain Doppler component is as follows:

$$W_d = [f_{d,1} \quad \cdots \quad f_{d,K}];$$

in which, K basis vectors in $W_d$ are selected by the terminal from candidate basis vectors; or, the K basis vectors in $W_d$ are fixed or predefined basis vectors.

In an optional design, the determining module 1002 is configured to:

determine the precoding matrix for downlink data transmission at the time point t according to the CSI by the following equation:

$$W = \sqrt{a} * W_1\big(\widetilde{W}_2 \odot D\big)W_f^H;$$

in which, $W_1$ represents a port selection matrix corresponding to the reference signal port, $\widetilde{W}_2$ represents a matrix of the combination coefficients, $W_f$ represents a matrix of the frequency domain basis vectors, $\sqrt{a}$ represents a power normalization factor, and H represents a conjugate transpose of a matrix.

In an optional design, the determining module 1002 is configured to:

determine the precoding matrix for downlink data transmission at the time point t according to the CSI by the following equation:

$$W = \sqrt{b}W_1\widetilde{\widetilde{W}}_2(W_d \otimes W_f)^H;$$

in which, $W_1$ represents a port selection matrix corresponding to the reference signal port, $\widetilde{\widetilde{W}}_2$ represents a matrix of the combination coefficients, $W_f$ represents a matrix of the frequency domain basis vectors, $\sqrt{b}$ represents a power normalization factor, and H represents a conjugate transpose of a matrix.

In an optional design, the determining module 1002 is configured to:

determine the precoding matrix for downlink data transmission at the time point t according to the CSI by at least one of following equations:

$$W = \sqrt{a} * W_1\big(\widetilde{W}_2 \odot D\big)W_f^H;$$

$$W = \sqrt{b}W_1\widetilde{\widetilde{W}}_2(W_d \otimes W_f)^H;$$

in which, $W_1$ represents a port selection matrix corresponding to the reference signal port, $\widetilde{W}_2$ and $\widetilde{\widetilde{W}}_2$ represent matrices of the combination coefficients, $W_f$ represents a matrix of the frequency domain basis vectors, D includes the time domain Doppler components represented by the phase offsets between adjacent time points for transmitting the beamformed downlink pilot signals, $W_d$ includes the time domain Doppler components represented by the basis vectors, D, $\widetilde{W}_2$, $\widetilde{\widetilde{W}}_2$ and $W_d^H$ are determined according to T groups of combination coefficients, $\sqrt{a}$ and $\sqrt{b}$ represents power normalization factors, and H represents a conjugate transpose of a matrix.

In an optional design, time intervals between adjacent time points in the T consecutive time points are equal, a time difference between the time point t and a first time point in the T consecutive time points is $\Delta t$, and $\Delta t$ is an integer

multiple of the time interval between adjacent time points in the T consecutive time points. The determining module 1002 is configured to:

determine the precoding matrix for downlink data transmission at the time point t according to the CSI by following equations:

$$W_t = \sqrt{c}W_1(\widetilde{W}_2 \odot D')W_f^H;$$

$$D' = \begin{bmatrix} e^{j\Delta t\varphi_{1,1}} & \cdots & e^{j\Delta t\varphi_{1,M}} \\ \vdots & \ddots & \vdots \\ e^{j\Delta t\varphi_{2L,1}} & \cdots & e^{j\Delta t\varphi_{1,M}} \end{bmatrix};$$

in which, $W_1$ represents a port selection matrix corresponding to the reference signal port, $\widetilde{W}_2$ represents a matrix of the combination coefficients, $W_f$ represents a matrix of the frequency domain basis vectors, $\sqrt{c}$ represents a power normalization factor, and the parameter L represents the number of the reference signal ports selected by the terminal, the parameter M represents the number of the frequency domain basis vectors selected by the terminal, the parameter L and the parameter M are positive integers, and H represents a conjugate transpose of a matrix.

In an optional design, the time domain Doppler component is represented by a discrete Fourier transform (DFT) basis vector, and time intervals between adjacent time points in the T consecutive time points are equal, t=T+n, indicating that the time point t is a time point after a last time point in the T time points, with a time interval from the last time point in the T time points being n times of a target time interval. The target time interval is the time interval between adjacent time points in the T consecutive time points, and n is a positive integer. The determining module 1002 is configured to:

determine the precoding matrix for downlink data transmission at the time point t according to the CSI by the following equation:

$$W_t = \sqrt{d}W_1\widetilde{\widetilde{W}}_2\left(\begin{bmatrix} f_{d,1}((t-T) \bmod T)e^{j\frac{2\pi k_1\left\lfloor\frac{t-T}{T}\right\rfloor+1}{O_3}} \\ \vdots \\ f_{d,K}((t-T) \bmod T)e^{j\frac{2\pi k_K\left\lfloor\frac{t-T}{T}\right\rfloor+1}{O_3}} \end{bmatrix} \otimes W_f\right)^H;$$

in which, $W_1$ represents a port selection matrix corresponding to the reference signal port, $\widetilde{\widetilde{W}}_2$ represents a matrix of the combination coefficients, $W_f$ represents a matrix of the frequency domain basis vectors, $f_{d,k}(T)$ represents elements in a $T^{th}$ row of the DFT basis vector, $k_K$ represents an index value of a $K^{th}$ DFT basis vector, $\sqrt{d}$ represents a power normalization factor, $O_3$ represents an oversampling factor, and H represents a conjugate transpose of a matrix.

In an optional design, the reference signal port includes at least one of the following:

a CSI-RS port; or
a DMRS port.

In an optional design, the downlink pilot signal includes at least one of the following:

a CSI-RS;
a DMRS; or
a combination of CSI-RS and DMRS.

In an optional design, the uplink reference signal is an SRS.
It should be noted that when the device provided in the above embodiments implements its functions, the division of the above functional modules is only used as an example. In practical applications, the above functions can be allocated to different functional modules according to actual needs. That is, the content structure of the device is divided into different functional modules to complete all or part of the functions described above.

Regarding the devices in the above embodiments, the specific manner in which each module performs operations has been described in detail in the embodiments related to the method, and will not be described in detail here.

FIG. 11 shows a schematic diagram of a communication device (a terminal or a network device) provided by an exemplary embodiment of the present disclosure. The communication device 110 includes: a processor 1101, a receiver 1102, a transmitter 1103, a memory 1104 and a bus 1105.

The processor 1101 includes one or more processing cores. The processor 1101 executes various functional applications and information processing by running software programs and modules.

The receiver 1102 and the transmitter 1103 can be implemented as a communication component, and the communication component can be a communication chip.

The memory 1104 is connected to the processor 1101 through a bus 1105.

The memory 1104 can be used to store at least one instruction, and the processor 1101 is used to execute the at least one instruction to implement each step in the above method embodiments.

Additionally, the memory 1104 may be implemented by any type of volatile or non-volatile storage device, or combination thereof, including but not limited to: magnetic or optical disks, an electrically erasable programmable Read-only memory (Erasable Programmable Read Only Memory, EEPROM), an erasable programmable read-only memory (Erasable Programmable Read Only Memory, EPROM), a static random access memory (Static Random Access Memory, SRAM), a read-only memory (Read-Only Memory (ROM), a magnetic memory, a flash memory, a Programmable Read-Only Memory (PROM).

When the communication device is implemented as a terminal, the processor and transceiver in the communication device involved in the embodiments of the present disclosure can be implemented together as a communication chip, or the transceiver alone forms a communication chip. The transmitter in the transceiver performs the transmitting step performed by the terminal in any of the above method embodiments, the receiver in the transceiver performs the receiving step performed by the terminal in any of the above method embodiments, and the processor performs steps other than transmitting and receiving steps, which will not be described here.

When the communication device is implemented as a network device, the processor and transceiver in the communication device involved in the embodiments of the present disclosure can be implemented together as a communication chip, or the transceiver alone forms a communication chip. The transmitter in the transceiver performs the transmitting step performed by the network device in any of the above method embodiments, the receiver in the transceiver performs the receiving step performed by the network device in any of the above method embodiments, and the processor Perform steps other than transmitting and receiving steps, which will not be described here.

In an embodiment, a computer-readable storage medium is also provided, in which at least one instruction, at least one program, code set or instruction set is stored, and the at least one instruction, the at least one program, code set or instruction set is loaded and executed by the processor to implement the method for reporting CSI or the method for determining precoding matrix provided by any of the above method embodiments.

In an embodiment, a chip is also provided. The chip includes programmable logic circuits and/or program instructions. When the chip is run on a communication device, it is used to implement the method for reporting CSI or the method for determining precoding matrix provided by any of the above method embodiments.

In an embodiment, a computer program product is also provided. When the computer program product is run on a processor of a computer device, the computer device performs the above-mentioned method for reporting CSI or the method for determining precoding matrix.

Those skilled in the art should realize that in one or more of the above examples, the functions described in the embodiments of the present disclosure can be implemented using hardware, software, firmware, or any combination thereof. When implemented using software, the functions may be stored on or transmitted over as one or more instructions or code on a computer-readable medium. Computer-readable media includes computer storage media and communication media including any medium that facilitates transfer of a computer program from one place to another. Storage media can be any available media that can be accessed by a general purpose or special purpose computer.

The above are only exemplary embodiments of the present disclosure and are not intended to limit the present disclosure. Any modifications, equivalent substitutions, improvements, etc. made within the spirit and principles of the present disclosure shall be included in the protection range of the present disclosure.

**Claims**

1. A method for reporting channel status information (CSI), performed by a terminal, comprising:

transmitting an uplink reference signal to a network device;

receiving beamformed downlink pilot signals transmitted by the network device at T consecutive time points;

estimating downlink effective channel information corresponding to the T consecutive time points according to the beamformed downlink pilot signals of the T consecutive time points;

determining CSI corresponding to the T consecutive time points according to the downlink effective channel information corresponding to the T consecutive time points; and

reporting the CSI to the network device;

wherein a beam used by the beamformed downlink pilot signals is determined based on uplink channel information estimated according to the uplink reference signal, and the CSI is used by the network device to determine a precoding matrix for downlink data transmission at a time point t, wherein the time point t is after the T consecutive time points, and T is a positive integer.

2. The method according to claim 1, wherein the CSI comprises at least one of:

port selection indication information;

frequency domain basis vector indication information;

time domain Doppler component indication information; or

combination coefficient indication information;

wherein the port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal, wherein the parameter L, the parameter M and the parameter K are positive integers.

3. The method according to claim 1, wherein the CSI comprises at least one of:

port selection indication information;

frequency domain basis vector indication information; or

combination coefficient indication information;

wherein the port selection indication information is used to indicate L reference signal ports selected by the terminal, the frequency domain basis vector indication information is used to indicate M frequency domain basis vectors selected by the terminal, and the combination coefficient indication information is used to indicate T groups of combination coefficients corresponding to the T consecutive time points determined by the terminal, wherein information on non-zero coefficient positions in matrices of the T groups of combination coefficients are the same, and the parameter L and the parameter M are positive integers.

4. The method according to claim 2, wherein the parameter K is determined in at least one of following ways:

being configured by the network device;

being predefined through negotiation between the terminal device and the network device; or

being determined by the terminal according to the downlink effective channel information.

5. The method of claim 4, further comprising:

in a case where the terminal determines the parameter K according to the downlink effective channel information, reporting the parameter K determined by the terminal to the network device.

6. The method of claim 2, wherein the time domain Doppler component is represented by a phase offset between adjacent time points for transmitting the downlink pilot signals; or, the time domain Doppler component is represented by a basis vector.

7. The method according to claim 6, wherein, in a case where the time domain Doppler component is represented by the phase offset, the parameter K is determined by the terminal according to a number of non-zero coefficients for each transmission layer.

8. The method according to claim 2, wherein the time domain Doppler component meets at least one of following conditions:

in a case where the downlink data transmission is single-layer transmission, time domain Doppler components corresponding to different polarization directions are the same or different;
time domain Doppler components corresponding to different reference signal ports are the same or different; or
time domain Doppler components corresponding to different time-frequency components are the same or different;
wherein the time-frequency component is composed of the frequency domain basis vector and the time domain Doppler component.

9. The method according to claim 2, wherein, in a case where the downlink data transmission is multi-layer transmission, time domain Doppler components corresponding to different transmission layers are the same or different.

10. The method according to claim 6, wherein the time domain Doppler component is represented by the phase offset, and an expression of the time domain Doppler component is:

$$D = \begin{bmatrix} e^{j\varphi_{1,1}} & \cdots & e^{j\varphi_{1,M}} \\ \vdots & \ddots & \vdots \\ e^{j\varphi_{2L,1}} & \cdots & e^{j\varphi_{1,M}} \end{bmatrix};$$

wherein $\varphi_{x,y}$ represents a phase offset value corresponding to an $x^{th}$ reference signal port and a $y^{th}$ frequency domain basis vector, the parameter L represents a number of the reference signal ports selected by the terminal, and the parameter M represents a number of the frequency domain basis vectors selected by the terminal, and wherein the parameter L and the parameter M are positive integers.

11. The method according to claim 10, wherein reporting the CSI to the network device comprises:
in a case of reporting the time domain Doppler component to the network device, reporting the phase offset value corresponding to the $x^{th}$ reference signal port and the $y^{th}$ frequency domain basis vector that meets the following condition:
an amplitude of a combination coefficient corresponding to the $x^{th}$ reference signal port and the $y^{th}$ frequency domain basis vector being not 0.

12. The method according to claim 6, wherein the time domain Doppler component is represented by the basis vector, and an expression of the time domain Doppler component is:

$$W_d = [f_{d,1} \quad \cdots \quad f_{d,K}];$$

wherein K basis vectors in $W_d$ are selected by the terminal from candidate basis vectors; or, the K basis vectors in $W_d$ are fixed or predefined basis vectors.

13. The method according to claim 6, wherein the time domain Doppler component is represented by the basis vector, and the basis vector comprises at least one of:

a discrete Fourier transform (DFT) basis vector;
a discrete cosine transform (DCT) basis vector; or
a polynomial basis vector.

14. The method according to claim 1, wherein the parameter T is determined in at least one of following ways:

being configured by the network device; or
being predefined through negotiation between the terminal device and the network device.

15. The method according to claim 2, wherein, in a case where the parameter T and/or the parameter K are configured by the network device, the parameter T and/or the parameter K are configured for the terminal by the network device through at least one of following signalings:

a radio resource control (RRC) signaling;
a medium access control-control unit (MAC-CE) signaling; or

downlink control information (DCI).

16. The method according to claim 2 or 3, wherein the reference signal port comprises at least one of:

> a channel status information-reference signal (CSI-RS) port; or
> a demodulation reference signal (DMRS) port.

17. The method according to claim 1, wherein the downlink pilot signal comprises at least one of:

> a channel status information-reference signal (CSI-RS);
> a demodulation reference signal (DMRS); or
> a combination of the CSI-RS and the DMRS.

18. The method according to claim 1, wherein the uplink reference signal is a sounding reference signal (SRS).

19. A method for determining a precoding matrix, performed by a network device, comprising:

> receiving an uplink reference signal transmitted by a terminal;
> estimating uplink channel information according to the uplink reference signal, and determining a beam for transmitting downlink pilot signals according to the uplink channel information;
> transmitting the downlink pilot signals beamformed with the beam to the terminal at T consecutive time points;
> receiving CSI corresponding to the T consecutive time points reported by the terminal; and
> determining a precoding matrix for downlink data transmission at a time point t according to the CSI;
> wherein the CSI is determined by the terminal according to the beamformed downlink pilot signals, the time point t is after the T consecutive time points, and T is a positive integer.

20. The method according to claim 19, wherein transmitting the downlink pilot signals beamformed with the beam to the terminal at T consecutive time points comprises:

> transmitting, at the T consecutive time points, the beamformed downlink pilot signals to the terminal using the same pilot signal resource port and the same beam;
> wherein the same pilot signal resource port comprises a port corresponding to same pilot signal resources, or the same port indexed by different pilot signal resources.

21. The method according to claim 19, wherein transmitting the downlink pilot signals beamformed with the beam to the terminal at T consecutive time points comprises:

> transmitting, at the T consecutive time points, different beamformed downlink pilot signals to the terminal using the same pilot signal resource port;
> wherein the same pilot signal resource port comprises ports with the same frequency domain position among ports configured with different pilot signal resources.

22. The method according to claim 19, wherein the CSI comprises at least one of:

> port selection indication information;
> frequency domain basis vector indication information;
> time domain Doppler component indication information; or
> combination coefficient indication information;
> wherein the port selection indication information is used to indicate L reference signal ports selected by the terminal, the frequency domain basis vector indication information is used to indicate M frequency domain basis vectors selected by the terminal, the time domain Doppler component indication information is used to indicate K time domain Doppler components selected by the terminal, and the combination coefficient indication information is used to indicate a combination coefficient determined by the terminal, wherein the parameter L, the parameter M and the parameter K are positive integers.

23. The method according to claim 19, wherein the CSI comprises at least one of:

> port selection indication information;

frequency domain basis vector indication information; or

combination coefficient indication information;

wherein the port selection indication information is used to indicate L reference signal ports selected by the terminal, the frequency domain basis vector indication information is used to indicate M frequency domain basis vectors selected by the terminal, and the combination coefficient indication information is used to indicate T groups of combination coefficients corresponding to the T consecutive time points determined by the terminal, wherein information on non-zero coefficient positions in matrices of the T groups of combination coefficients are the same, and the parameter L and the parameter M are positive integers.

24. The method according to claim 22, wherein the time domain Doppler component is represented by a phase offset between adjacent time points for transmitting the downlink pilot signals; or the time domain Doppler component is represented by a basis vector.

25. The method according to claim 24, wherein the time domain Doppler component is represented by the phase offset, and an expression of the time domain Doppler component is:

$$D = \begin{bmatrix} e^{j\varphi_{1,1}} & \cdots & e^{j\varphi_{1,M}} \\ \vdots & \ddots & \vdots \\ e^{j\varphi_{2L,1}} & \cdots & e^{j\varphi_{1,M}} \end{bmatrix};$$

wherein $\varphi_{x,y}$ represents a phase offset value corresponding to an $x^{th}$ reference signal port and a $y^{th}$ frequency domain basis vector, the parameter L represents a number of the reference signal ports selected by the terminal, and the parameter M represents a number of the frequency domain basis vectors selected by the terminal, wherein the parameter L and the parameter M are positive integers.

26. The method according to claim 24, wherein the time domain Doppler component is represented by the basis vector, and an expression of the time domain Doppler component is:

$$W_d = [f_{d,1} \quad \cdots \quad f_{d,K}];$$

wherein K basis vectors in $W_d$ are selected by the terminal from candidate basis vectors; or, the K basis vectors in $W_d$ are fixed or predefined basis vectors.

27. The method according to claim 25, wherein determining the precoding matrix for downlink data transmission at the time point t according to the CSI comprises:

determining the precoding matrix for downlink data transmission at the time point t according to the CSI by the following equation:

$$W = \sqrt{a} * W_1 (\widetilde{W}_2 \odot D) W_f^H;$$

wherein $W_1$ represents a port selection matrix corresponding to the reference signal port, $\widetilde{W}_2$ represents a matrix of the combination coefficients, $W_f$ represents a matrix of the frequency domain basis vectors, $\sqrt{a}$ represents a power normalization factor, and H represents a conjugate transpose of a matrix.

28. The method according to claim 26, wherein determining the precoding matrix for downlink data transmission at the time point t according to the CSI comprises:

determining the precoding matrix for downlink data transmission at the time point t according to the CSI by the following equation:

$$W = \sqrt{b} W_1 \widetilde{\widetilde{W}}_2 (W_d \otimes W_f)^H;$$

wherein $W_1$ represents a port selection matrix corresponding to the reference signal port, $\widetilde{\widetilde{W}}_2$ represents a matrix of the combination coefficients, $W_f$ represents a matrix of the frequency domain basis vectors, $\sqrt{b}$ represents a power normalization factor, and H represents a conjugate transpose of a matrix.

29. The method according to claim 23, wherein determining the precoding matrix for downlink data transmission at the time point t according to the CSI comprises:

   determining the precoding matrix for downlink data transmission at the time point t according to the CSI by at least one of following equations:

$$W = \sqrt{a} * W_1\left(\widetilde{W}_2 \odot D\right)W_f^H;$$

$$W = \sqrt{b}\,W_1\widetilde{\widetilde{W}}_2\left(W_d \otimes W_f\right)^H;$$

   wherein $W_1$ represents a port selection matrix corresponding to the reference signal port, $\tilde{W}_2$ and $\widetilde{\widetilde{W}}_2$ represent matrices of the combination coefficients, $W_f$ represents a matrix of the frequency domain basis vectors, D comprises the time domain Doppler components represented by the phase offsets between adjacent time points for transmitting the beamformed downlink pilot signals, $W_d$ comprises the time domain Doppler components represented by the basis vectors, D, $\tilde{W}_2$, $\widetilde{\widetilde{W}}_2$ and $W_d^H$ are determined according to T groups of combination coefficients, $\sqrt{a}$ and $\sqrt{b}$ represents power normalization factors, and H represents a conjugate transpose of a matrix.

30. The method according to claim 25, wherein time intervals between adjacent time points in the T consecutive time points are equal, a time difference between the time point t and a first time point in the T consecutive time points is $\Delta t$, and $\Delta t$ is an integer multiple of the time interval between adjacent time points in the T consecutive time points; and wherein determining the precoding matrix for downlink data transmission at the time point t according to the CSI comprises:

   determining the precoding matrix for downlink data transmission at the time point t according to the CSI by following equations:

$$W_t = \sqrt{c}\,W_1\left(\widetilde{W}_2 \odot D'\right)W_f^H;$$

$$D' = \begin{bmatrix} e^{j\Delta t\varphi_{1,1}} & \cdots & e^{j\Delta t\varphi_{1,M}} \\ \vdots & \ddots & \vdots \\ e^{j\Delta t\varphi_{2L,1}} & \cdots & e^{j\Delta t\varphi_{1,M}} \end{bmatrix};$$

   wherein $W_1$ represents a port selection matrix corresponding to the reference signal port, $\tilde{W}_2$ represents a matrix of the combination coefficients, $W_f$ represents a matrix of the frequency domain basis vectors, $\sqrt{c}$ represents a power normalization factor, and the parameter L represents the number of the reference signal ports selected by the terminal, the parameter M represents the number of the frequency domain basis vectors selected by the terminal, the parameter L and the parameter M are positive integers, and H represents a conjugate transpose of a matrix.

31. The method according to claim 26, wherein the time domain Doppler component is represented by a discrete Fourier transform (DFT) basis vector, and time intervals between adjacent time points in the T consecutive time points are equal, t=T+n, indicating that the time point t is a time point after a last time point in the T time points, with a time interval from the last time point in the T time points being n times of a target time interval, wherein the target time interval is the time interval between adjacent time points in the T consecutive time points, and n is a positive integer; and wherein determining the precoding matrix for downlink data transmission at the time point t according to the CSI comprises:

determining the precoding matrix for downlink data transmission at the time point t according to the CSI by the following equation:

$$
W_t = \sqrt{d}\, W_1 \widetilde{\widetilde{W}}_2 \left( \begin{bmatrix} f_{d,1}((t-T) \bmod T) e^{j\frac{2\pi k_1\left|\frac{t-T}{T}\right|+1}{O_3}} \\ \vdots \\ f_{d,K}((t-T) \bmod T) e^{j\frac{2\pi k_K\left|\frac{t-T}{T}\right|+1}{O_3}} \end{bmatrix} \otimes W_f \right)^H ;
$$

wherein $W_1$ represents a port selection matrix corresponding to the reference signal port, $\widetilde{\widetilde{W}}_2$ represents a matrix of the combination coefficients, $W_f$ represents a matrix of the frequency domain basis vectors, $f_{d,k}(T)$ represents elements in a $T^{th}$ row of the DFT basis vector, $k_K$ represents an index value of a $K^{th}$ DFT basis vector, $\sqrt{d}$ represents a power normalization factor, $O_3$ represents an oversampling factor, and H represents a conjugate transpose of a matrix.

32. The method according to claim 22 or 23, wherein the reference signal port comprises at least one of:

a channel status information-reference signal (CSI-RS) port; or
a demodulation reference signal (DMRS) port.

33. The method according to claim 19, wherein the downlink pilot signal comprises at least one of:

a channel status information-reference signal (CSI-RS);
a demodulation reference signal (DMRS); or
a combination of the CSI-RS and the DMRS.

34. The method according to claim 19, wherein the uplink reference signal is a sounding reference signal SRS.

35. An apparatus for reporting channel status information (CSI), comprising:

a transmitting module, configured to transmit an uplink reference signal to a network device;
a receiving module, configured to receive beamformed downlink pilot signals transmitted by the network device at T consecutive time points; and
a determining module, configured to estimate downlink effective channel information corresponding to the T consecutive time points according to the beamformed downlink pilot signals of the T consecutive time points;
wherein the determining module is further configured to determine CSI corresponding to the T consecutive time points according to the downlink effective channel information corresponding to the T consecutive time points; and
the transmitting module is further configured to report the CSI to the network device;
wherein a beam used by the beamformed downlink pilot signals is determined based on uplink channel information estimated according to the uplink reference signal, and the CSI is used by the network device to determine a precoding matrix for downlink data transmission at a time point t, wherein the time point t is after the T consecutive time points, and T is a positive integer.

36. An apparatus for determining a precoding matrix, comprising:

a receiving module, configured to receive an uplink reference signal transmitted by the terminal;
a determining module, configured to estimate uplink channel information according to the uplink reference signal, and determine a beam for transmitting downlink pilot signals according to the uplink channel information; and
a transmitting module, configured to transmit the downlink pilot signals beamformed with the beam to the terminal at T consecutive time points;

wherein the receiving module is further configured to receive CSI corresponding to the T consecutive time points reported by the terminal; and

the determining module is further configured to determine a precoding matrix for downlink data transmission at a time point t according to the CSI;

wherein the CSI is determined by the terminal according to the beamformed downlink pilot signals, and the time point t is after the T consecutive time points, and T is a positive integer.

**37.** A terminal, comprising:

a processor;

a transceiver coupled to the processor;

a memory for storing executable instructions for the processor;

wherein the processor is configured to load and execute the executable instructions to perform the method for reporting CSI according to any one of claims 1 to 18.

**38.** A network device, comprising:

a processor;

a transceiver coupled to the processor;

a memory for storing executable instructions for the processor;

wherein the processor is configured to load and execute the executable instructions to perform the method for determining a precoding matrix according to any one of claims 19 to 34.

**39.** A computer-readable storage medium, having executable instructions stored thereon that, when loaded and executed by a processor, the method for reporting CSI according to any one of claims 1 to 18 or the method for determining a precoding matrix according to any one of claims 19 to 34 is performed.

**40.** A chip, comprising a programmable logic circuit or program, configured to perform the method for reporting CSI according to any one of claims 1 to 18, or the method for determining a precoding matrix according to any of claims 19 to 34.

**41.** A computer program product, comprising computer instructions, wherein the computer instructions are stored in a computer-readable storage medium, a processor of a computer device reads the computer instructions from the computer-readable storage medium, and the processor executes the computer instructions, causing the computer device to perform the method for reporting CSI according to any one of claims 1 to 18, or the method for determining a precoding matrix according to any one of claims 19 to 34.

communication system 100

core network

~ 30

~ 20

access
network

10

terminal

FIG. 1

transmitting an uplink reference signal to a network device
202

receiving beamformed downlink pilot signals transmitted by the network device at T consecutive time points
204

estimating downlink effective channel information corresponding to the T consecutive time points according to the beamformed downlink pilot signals of the T consecutive time points
206

determining CSI corresponding to the T consecutive time points according to the downlink effective channel information corresponding to the T consecutive time points
208

reporting the CSI to the network device
210

FIG. 2

| receiving an uplink reference signal transmitted by a terminal | 302 |

| estimating uplink channel information according to the uplink reference signal, and determining a beam for transmitting downlink pilot signals according to the uplink channel information | 304 |

| transmitting the downlink pilot signals beamformed with the beam to the terminal at T consecutive time points | 306 |

| receiving CSI corresponding to the T consecutive time points reported by the terminal | 308 |

| determining a precoding matrix for downlink data transmission at a time point t according to the CSI | 310 |

FIG. 3

```
┌─────────────────────┐                    ┌─────────────────────┐
│      terminal       │                    │   network device    │
└─────────────────────┘                    └─────────────────────┘
          │                                           │
          │       402, uplink reference signal        │
          │──────────────────────────────────────────▶│
          │                                           │
          │                            ┌──────────────────────────────┐
          │                            │ 404, estimating uplink channel│
          │                            │ information based on the uplink│
          │                            │ reference signal, and calculating│
          │                            │ a beam for transmitting downlink│
          │                            │ pilot signals according to the │
          │                            │  uplink channel information    │
          │                            └──────────────────────────────┘
          │                                           │
          │    406, transmitting downlink pilot signals│
          │    beamformed with the beam to the terminal│
          │         at T consecutive time points       │
          │◀──────────────────────────────────────────│
          │                                           │
┌──────────────────────────┐                          │
│ 408, estimating the downlink│                        │
│ effective channel information│                       │
│   corresponding to the T   │                         │
│ consecutive time points based on│                    │
│ the beamformed downlink pilot│                       │
│ signals at the T consecutive time│                   │
│          points            │                         │
└──────────────────────────┘                          │
┌──────────────────────────┐                          │
│ 410, determining a first type of│                    │
│    CSI corresponding to the T    │                   │
│ consecutive time points based on │                   │
│   the downlink effective channel │                   │
│  information corresponding to T  │                   │
│     consecutive time points      │                   │
└──────────────────────────┘                          │
          │                                           │
          │      412, reporting the first type of CSI  │
          │──────────────────────────────────────────▶│
          │                                           │
          │                            ┌──────────────────────────────┐
          │                            │ 414, calculating the precoding│
          │                            │    matrix for downlink data    │
          │                            │ transmission at the time point t│
          │                            │  based on the first type of CSI │
          │                            └──────────────────────────────┘
          │                                           │
```

FIG. 4

beamformed
CSI-RS burst

$t_0$

T

t

FIG. 5

```
┌─────────────────────┐                    ┌─────────────────────┐
│      terminal       │                    │   network device    │
└─────────────────────┘                    └─────────────────────┘
           │                                          │
           │        602, uplink reference signal      │
           │─────────────────────────────────────────▶│
           │                                          │
           │                          ┌───────────────────────────────────┐
           │                          │ 604, estimating uplink channel    │
           │                          │ information based on the uplink   │
           │                          │ reference signal, and calculating a│
           │                          │ beam used to transmit the         │
           │                          │ downlink pilot signal based on the│
           │                          │ uplink channel information        │
           │                          └───────────────────────────────────┘
           │                                          │
           │    606, transmitting downlink pilot signals
           │    beamformed with the beam to the terminal
           │         at T consecutive time points      │
           │◀─────────────────────────────────────────│
           │                                          │
┌────────────────────────────────┐                   │
│ 608, estimating the downlink    │                   │
│ effective channel information   │                   │
│ corresponding to the T consecutive                  │
│ time points based on the        │                   │
│ beamformed downlink pilot       │                   │
│ signals at the T consecutive time                   │
│ points                          │                   │
└────────────────────────────────┘                   │
┌────────────────────────────────┐                   │
│ 610, determining a second type of                   │
│ CSI corresponding to the T      │                   │
│ consecutive time points based on│                   │
│ the downlink effective channel  │                   │
│ information corresponding to T   │                   │
│ consecutive time points         │                   │
└────────────────────────────────┘                   │
           │                                          │
           │     612, reporting the second type of CSI │
           │─────────────────────────────────────────▶│
           │                                          │
           │                          ┌───────────────────────────────────┐
           │                          │ 614, calculating the precoding    │
           │                          │ matrix for downlink data          │
           │                          │ transmission at the time point t  │
           │                          │ based on the second type of CSI   │
           │                          └───────────────────────────────────┘
           │                                          │
```

FIG. 6

beamformed
CSI-RS burst

$t_0$

T

t

FIG. 7

```
┌──────────────────┐                              ┌──────────────────┐
│                  │                              │                  │
│     terminal     │                              │  network device  │
│                  │                              │                  │
└────────┬─────────┘                              └─────────┬────────┘
         │                                                  │
         │         802, uplink reference signal             │
         │─────────────────────────────────────────────────▶
         │                                                  │
         │                              ┌───────────────────────────────────┐
         │                              │  804, estimating uplink channel    │
         │                              │  information based on the uplink    │
         │                              │  reference signal, and calculating a│
         │                              │  beam used to transmit the          │
         │                              │  downlink pilot signal based on the │
         │                              │  uplink channel information         │
         │                              └───────────────────────────────────┘
         │                                                  │
         │      806, transmitting downlink pilot signals    │
         │   beamformed with the beam to the terminal at    │
         │          T consecutive time points               │
         ◀─────────────────────────────────────────────────│
         │                                                  │
┌─────────────────────────────────┐                        │
│  808, estimating the downlink    │                        │
│  effective channel information   │                        │
│ corresponding to the T consecutive│                       │
│    time points based on the      │                        │
│    beamformed downlink pilot     │                        │
│  signals at the T consecutive time│                       │
│            points                │                        │
└─────────────────────────────────┘                        │
┌─────────────────────────────────┐                        │
│ 810, determining a second type of│                        │
│   CSI corresponding to the T     │                        │
│  consecutive time points based on│                        │
│   the downlink effective channel │                        │
│ information corresponding to the T│                       │
│     consecutive time points      │                        │
└─────────────────────────────────┘                        │
         │                                                  │
         │       812, reporting the second type of CSI      │
         │─────────────────────────────────────────────────▶
         │                                                  │
         │                              ┌───────────────────────────────────┐
         │                              │  814, calculating the precoding    │
         │                              │  matrix for downlink data           │
         │                              │  transmission at the time point t   │
         │                              │  based on the second type of CSI    │
         │                              └───────────────────────────────────┘
         │                                                  │
```

FIG. 8

transmitting
module — 901

receiving
module — 902

determining
module — 903

FIG. 9

receiving
module — 1001

determining
module — 1002

transmitting
module — 1003

FIG. 10

communication device 110

processor — 1101        1103 — transmitter

bus — 1105

receiver — 1102        memory — 1104

FIG. 11

EP 4 518 173 A1

# INTERNATIONAL SEARCH REPORT

International application No.

**PCT/CN2022/089666**

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; 3GPP; IEEE: 信道状态信息, 探测参考信号, 上报, 连续, 相邻, 时域, 时刻, 时隙, 导频, 波束, 估计, 预编码, 矩阵, 多普勒, CSI, SRS, report, adjacent, time domain, slot, pilot, beamform, estimate, precoding, matrix

### C. DOCUMENTS CONSIDERED TO BE RELEVANT

| Category* | Citation of document, with indication, where appropriate, of the relevant passages | Relevant to claim No. |
|---|---|---|
| E | WO 2022203442 A1 (SAMSUNG ELECTRONICS CO., LTD.) 29 September 2022 (2022-09-29) description, paragraphs [46]-[319] | 1-2, 4-6, 14-15, 17-19, 22, 24, 33-41 |
| Y | CN 113131978 A (DATANG MOBILE COMMUNICATIONS EQUIPMENT CO., LTD.) 16 July 2021 (2021-07-16) description, paragraphs [0116]-[0266] | 1-41 |
| Y | CN 112514276 A (FRAUNHOFER-GESELLSCHAFT ZUR FÖRDERUNG DER ANGEWANDTEN FORSCHUNG E. V.) 16 March 2021 (2021-03-16) description, paragraphs [0055]-[0385] | 1-41 |
| Y | CN 113258974 A (DATANG MOBILE COMMUNICATIONS EQUIPMENT CO., LTD.) 13 August 2021 (2021-08-13) description, paragraphs [0108]-[0349] | 1-41 |
| A | WO 2022009151 A1 (TELEFONAKTIEBOLAGET LM ERICSSON (PUBL)) 13 January 2022 (2022-01-13) entire document | 1-41 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2022** | **22 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/089666**

| Patent document cited in search report | | | Publication date (day/month/year) | Patent family member(s) | | | Publication date (day/month/year) |
|---|---|---|---|---|---|---|---|
| WO | 2022203442 | A1 | 29 September 2022 | US | 2022329303 | A1 | 13 October 2022 |
| CN | 113131978 | A | 16 July 2021 | WO | 2021135837 | A1 | 08 July 2021 |
| | | | | CN | 113131978 | B | 08 July 2021 |
| | | | | TW | 202125991 | A | 01 July 2021 |
| CN | 112514276 | A | 16 March 2021 | EP | 3804157 | A1 | 14 April 2021 |
| | | | | JP | 2021525988 | A | 27 September 2021 |
| | | | | EP | 3576312 | A1 | 04 December 2019 |
| | | | | US | 2021143885 | A1 | 13 May 2021 |
| | | | | KR | 20210014698 | A | 09 February 2021 |
| | | | | WO | 2019229152 | A1 | 05 December 2019 |
| | | | | WO | 2020052736 | A1 | 19 March 2020 |
| | | | | IN | 202037050535 | A | 25 December 2020 |
| | | | | CN | 112997418 | A | 18 June 2021 |
| | | | | KR | 20210076905 | A | 24 June 2021 |
| CN | 113258974 | A | 13 August 2021 | WO | 2021160122 | A1 | 19 August 2021 |
| WO | 2022009151 | A1 | 13 January 2022 | | None | | |

Form PCT/ISA/210 (patent family annex) (January 2015)